# EUROPEAN PATENT SPECIFICATION

(11) **EP 4 207 753 B1**
(45) Date of publication and mention of the grant of the patent: **22.10.2025**
(21) Application number: 21874335.9
(22) Date of filing: 23.09.2021
(51) Int. Cl.: H04N 7/14

(54) **VIDEO CALL METHOD, ELECTRONIC DEVICE AND SYSTEM**
VIDEOANRUFVERFAHREN, ELEKTRONISCHE VORRICHTUNG UND SYSTEM
PROCÉDÉ D'APPEL VIDÉO, DISPOSITIF ÉLECTRONIQUE ET SYSTÈME

(30) Priority: 30.09.2020 CN 202011063489
(43) Date of publication of application: 05.07.2023
(73) Proprietor: Huawei Technologies Co., Ltd., Shenzhen, Guangdong 518129 (CN)
(72) Inventor: ZHANG, Xingong, Shenzhen, Guangdong 518129 (CN); WANG, Manjie, Shenzhen, Guangdong 518129 (CN)
(74) Representative: Körber, Martin Hans
(86) International application number: PCT/CN2021/119997
(87) International publication number: WO 2022/068674

(56) References cited:
- WO-A1-2017/131842
- WO-A2-2020/107040
- CN-A- 101 365 125
- CN-A- 101 365 125
- CN-A- 108 200 387
- CN-A- 109 495 753
- CN-A- 110 753 187
- US-A1- 2010 185 795
- US-A1- 2016 373 749
- US-B1- 10 432 970
- CHI ZHANG ET AL: "A user-centric network communication broker for multimedia collaborative computing", MULTIMEDIA TOOLS AND APPLICATIONS, KLUWER ACADEMIC PUBLISHERS, BO, vol. 50, no. 2, 13 October 2009 (2009-10-13), pages 335 - 357, XP019826783, ISSN: 1573-7721

## Description

### TECHNICAL FIELD

This application relates to the field of terminal and communication technologies, and in particular, to a video call method and, an electronic device,

### BACKGROUND

With the development of network technologies, users have higher requirements on a transmission delay and image quality of a video call. In a video call, network transmission conditions vary due to factors such as locations of participants. As a result, different participants have different requirements on resolution and frame rate of a transmitted video stream. Participants with good network transmission conditions can request higher video resolution and frame rate to meet high-quality image requirements during the video call.

How to meet call requirements of different users during the video call is a current research direction. WO 2017/131842 A1 discloses technics for video bridging for conversion of IP network video streams to the USB video class. CN 110753187 A discloses a smart device and camera control method, wherein multiple applications call one camera of the smart device at the same time and optimize the configuration of camera parameters when multiple applications control the camera at the same time.

### SUMMARY

This application provides a video call method, an electronic device, and a system, so that in a video call, the electronic device can implement customized processing of video streams, to meet requirements of different users. The present invention is defined by the enclosed claims. In the enclosed description, embodiments which are not covered by the claims are to be considered as examples necessary for understanding the invention.

According to the technical solutions provided in this application, when the electronic device and the plurality of peer devices make a video call by using an instant messaging application, the electronic device may negotiate different parameters with different peer devices, use different parameters to collect an image sequence, process the image sequence, to obtain a plurality of video streams, and then separately send processed video streams to the different peer devices. This can implement customized processing of the video streams, and meet requirements of different users. In addition, in this method, the electronic device does not need to perform encoding and decoding on the video stream for a plurality of times, so as to reduce a transmission delay and improve user experience.

### BRIEF DESCRIPTION OF DRAWINGS

FIG. 1 is a diagram of a video stream processing process of an electronic device during a video call in a conventional technology;
FIG. 2 is a diagram of another video stream processing process of an electronic device during a video call in a conventional technology;
FIG. 3 is a schematic diagram of a structure of a communication system 100 according to an embodiment of this application;
FIG. 4 is a diagram of a hardware structure of an electronic device 200 according to an embodiment of this application;
FIG. 5 is a schematic diagram of a structure of a camera 127 according to an embodiment of this application;
FIG. 6 is a diagram of a software structure of an electronic device 200 according to an embodiment of this application;
FIG. 7 shows an overall process of a video call method according to an embodiment of this application;
FIG. 8A to FIG. 8D, FIG. 9(a) and FIG. 9(b), and FIG. 10 show example scenarios in which an electronic device 101 and an electronic device 102 establish a video call connection according to an embodiment of this application;
FIG. 11(a) to FIG. 11(c) are a schematic diagram of establishing a video stream transmission channel by an electronic device 101 according to the claimed invention;
FIG. 12 is a flowchart of processing, after an electronic device 102 receives a video stream, the video stream according to an embodiment of this application;
FIG. 13(a) and FIG. 13(b) show an example scenario in which an electronic device 101 and an electronic device 102 play a video stream according to an embodiment of this application;
FIG. 14 shows an example scenario in which an electronic device 103 joins a video call according to an embodiment of this application;
FIG. 15 and FIG. 16(a) and FIG. 16(b) show example scenarios in which electronic devices 101 to 103 play a video stream after an electronic device 103 joins a video call according to an embodiment of this application;
FIG. 17(a) and FIG. 17(b) show an example scenario in which an electronic device 102 exits a video call according to an embodiment of this application;
FIG. 18(a) and FIG. 18(b) show an example scenario in which an electronic device 101 and an electronic device 103 play a video stream after the electronic device 103 joins a video call according to an embodiment of this application;
FIG. 19(a) and FIG. 19(b) are a schematic diagram of two manners in which an electronic device 103 processes three video streams according to an embodiment of this application; and
FIG. 20(a) and FIG. 20(b) are a format diagram of a data unit in a UVC command according to an embodiment of this application.

### DESCRIPTION OF EMBODIMENTS

The technical solutions according to embodiments of this application are clearly and completely described in the following with reference to the accompanying drawings. In the descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

Terms "first" and "second" in the following are used for description only, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language such as Java or an extensible markup language (extensible markup language, XML). Interface source code is parsed and rendered on an electronic device, and is finally presented as content that can be identified by the user. The user interface is usually represented in a form of a graphic user interface (graphic user interface, GUI), and is a user interface that is related to a computer operation and that is displayed in a graphic manner. The user interface may be a visual interface element such as a text, an icon, a button, a menu, a tab, a text box, a dialog box, a status bar, a navigation bar, or a Widget that is displayed on a display of the electronic device.

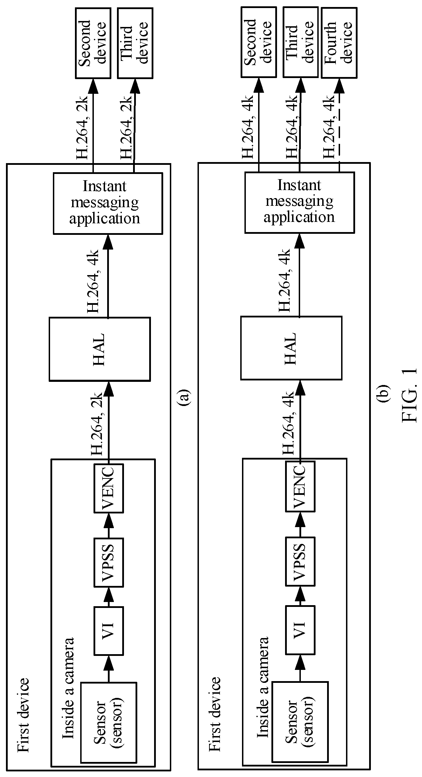

FIG. 1 shows a video stream processing process of an electronic device during a video call in the conventional technology.

Refer to (a) in FIG. 1. When a first device makes a video call with a second device and a third device, a session (session) is established inside the first device. The session is from a sensor (sensor) inside a camera of the first device to an instant messaging application (application, app) of the first device through a video input (video input, VI) module, a video process sub-system (video process sub-system, VPSS), a video encoder (video encoder, VENC), and a hardware abstraction layer (hardware abstraction layer, HAL).

Then, the first device collects an image sequence based on a parameter negotiated with the second device and the third device, processes the image sequence to obtain a video stream, and separately sends the video stream to the second device and the third device through the established session. The sensor is configured to collect the image sequence, and the VENC may be configured to encode the image sequence in a negotiated encoding format, to obtain and output the video stream.

For example, the VENC of the first device may output a video stream with an encoding format of H.264 and resolution of 2k, and transmit the video stream to the HAL. The HAL is used to transmit the video stream to the instant messaging application. The instant messaging application separately sends the received video stream to the second device and the third device.

Refer to (b) in FIG. 1. In a process in which the first device, the second device, and the third device make a video call, if a fourth device joins the video call, and quality of the video call requested by the fourth device is higher than quality of the video call established among the first device, the second device, and the third device, the first device needs to disconnect the previously established session, and establish a new session. Then, the first device may collect the image sequence based on a new parameter, process the image sequence to obtain a video stream, and separately send the video stream to the second device, the third device, and the fourth device through a newly established session.

For example, the VENC of the first device may output a video stream with an encoding format of H.264 and resolution of 4k, and transmit the video stream to the HAL. The HAL is used to transmit the video stream to the instant messaging application. The instant messaging application separately sends the received video stream to the second device, the third device, and the fourth device.

It can be learned that, in FIG. 1, the first device sends the same video stream to peer devices, and customized processing cannot be performed on the video stream based on different requirements of the peer devices. In addition, it may take more than 1s to disconnect the previously established session and establish a new session, resulting in a relatively long call delay and poor user experience.

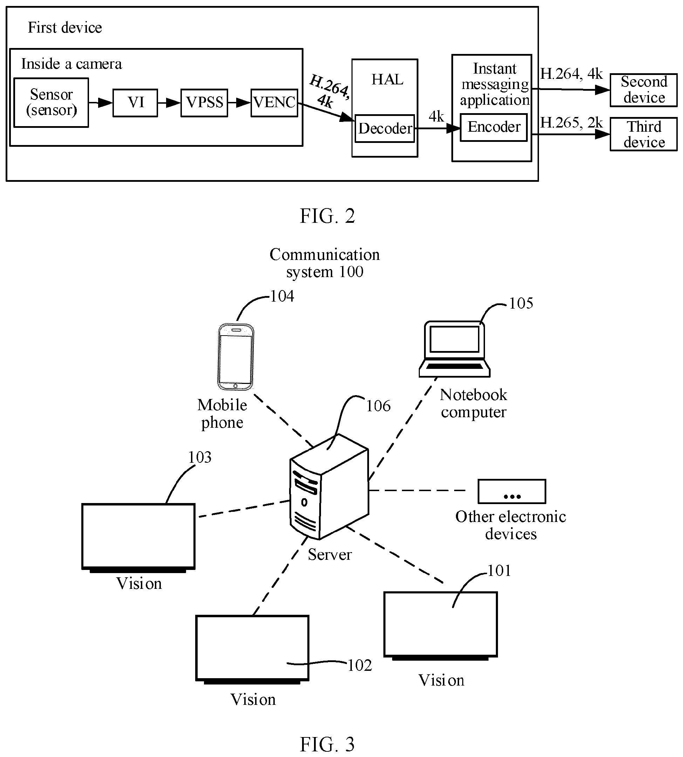

FIG. 2 shows another video stream processing process of an electronic device during a video call in the conventional technology.

A difference between FIG. 2 and FIG. 1 lies in that, in the process in which the first device makes a video call with the second device and the third device, the HAL may be used to decode the video stream, and the instant messaging application uses parameters required by different peer devices to re-encode the video stream, and then transmits the re-encoded video stream to the second device and the third device.

For example, the VENC of the first device may output the video stream with the encoding format of H.264 and the resolution of 4k to the HAL. Then, a decoder at the HAL decodes the video stream, and outputs a video stream with resolution of 4k. Then, the HAL is used to transmit the video stream to the instant messaging application. After receiving the video stream, the instant messaging application processes the video stream again and outputs two video streams. One video stream is with an encoding format of H.264 and resolution of 4k. The instant messaging application transmits the video stream to the second device. Another video stream is with an encoding format of H.265 and resolution of 2k. The instant messaging application transmits the video stream to the third device.

In this process, although customized processing of a video stream may be implemented for different peer devices, re-decoding and encoding may cause an extra delay and poor user experience.

To resolve the problem in the conventional technology, the following embodiments of this application provide a video call method, an electronic device, and a system. In this method, when a video call is made between an electronic device and a plurality of peer devices by using an instant messaging application, the electronic device may negotiate different parameters with different peer devices, use different parameters to collect an image sequence, process the image sequence, to obtain a plurality of video streams, and then separately send processed video streams to the different peer devices. During the video call, if a new peer device joins the video call, the electronic device may further use a parameter negotiated with the new peer device to collect the image sequence, process the image sequence to obtain a video stream, and send the video stream to the new peer device. In this embodiment of this application, the video stream includes a plurality of consecutive image frames.

Specifically, the electronic device may establish a plurality of video stream transmission channels (channel) between the camera and the HAL. The plurality of channels correspond to the plurality of peer devices, that is, a quantity of channels established by the electronic device is the same as a quantity of peer devices during the video call. After using the parameter negotiated with the peer device to collect the image sequence, and processing the image sequence to obtain the video stream, the electronic device may transmit the video stream to the peer device through a channel corresponding to the peer device.

Compared with the conventional technology, in the method of this embodiment of this application, the electronic device uses different parameters to collect the image sequence, and processes the image sequence to obtain the plurality of video streams, thereby implementing customized processing of the video streams, and meeting requirements of different users. In addition, in this method, the electronic device does not need to perform encoding and decoding on the video stream for a plurality of times, so as to reduce a transmission delay and improve user experience.

In one case, if a new peer device subsequently joins the video call, and the subsequently joined peer device requires lower video call quality, the electronic device may establish a new internal channel. In this case, a delay of establishing a new channel by the electronic device is extremely low, and user experience is not affected.

In another case, if a new peer device subsequently joins the video call, and the subsequently joined peer device requires higher video call quality, the electronic device may also establish a new internal channel. In this case, the electronic device does not need to disconnect the previously established channel, and only needs to restart the sensor in the camera and establish a new channel. In this way, the delay of establishing the new channel can be greatly reduced, and user experience may not be affected.

In another case, if a peer device exits the video call, the electronic device deletes a channel corresponding to the peer device.

Herein, for a manner in which the electronic device uses different parameters to collect the image sequence and processes the image sequence to obtain the video stream, and the process of establishing the plurality of channels (channel) between the camera and the HAL, refer to detailed descriptions in subsequent method embodiments. Details are not described herein again.

The parameter mentioned in this embodiment of this application may include one or more of the following: resolution and an encoding and decoding format. In some other embodiments, the parameter may further include one or more of a bit rate, a frame rate, or another parameter. These parameters are described in detail in subsequent embodiments, and details are not described herein again.

The following first describes a communication system 100 to which embodiments of this application are applied.

FIG. 3 is a schematic diagram of a structure of the communication system 100 according to an embodiment of this application.

As shown in FIG. 3, the communication system includes a plurality of electronic devices such as electronic devices 101 to 105 and a server 106.

The electronic device in this embodiment of this application may be a terminal device that carries Android, Huawei HarmonyOS (Huawei HarmonyOS), iOS, Microsoft, or another operating system, for example, a Vision, a mobile phone, a tablet computer, a notebook computer, a personal computer, a wearable device such as a sports band, a sports watch, a laptop (laptop), or a desktop computer having a touch-sensitive surface or a touch panel. For example, in the example shown in FIG. 3, the electronic devices 101 to 103 are Visions, the electronic device 104 is a mobile phone, and the device 105 is a notebook computer.

A first app is installed in each electronic device such as the electronic devices 101 to 103. The first app is an instant messaging application. The first app may provide a video call function. The first app may be, for example, Huawei's "MeeTime". A user may log in to the first app in the electronic device by using a user identity. The identity may be, for example, an account (for example, a name, a Huawei identity (identity, ID), or a mobile phone number) and a password, a face image, a voiceprint, or a fingerprint. After logging in to the first app, the user may make a video call with a contact in the first app.

The server 106 in this embodiment of this application is configured to provide various services for the first app, for example, a communication service (such as a video call), a communication record backup service, and a connection service.

The electronic device may access the server 106 by accessing the Internet, and the electronic device may communicate with the server 106 by using a cellular mobile communication technology such as 3G, 4G, or 5G, a wide area network (wide area network, WAN) technology, a local area network (local area network, LAN) technology, a wireless local area network (wireless LAN, WLAN) technology, or the like.

The electronic device may run the first app, and make a video call by using the server 106. The video call refers to a communication mode in which voice and an image are transmitted in real time among the plurality of electronic devices.

A video call among the electronic devices 101 to 103 is used as an example for description.

The electronic device 101 may collect an image sequence, process the image sequence to obtain a video stream, and send the video stream to the electronic device 102 and the electronic device 103 by using the server 106. The electronic device 102 and the electronic device 103 may receive the video stream sent by the electronic device 101, perform corresponding processing on the video stream, and play the video stream.

Similarly, the electronic device 102 may also collect an image sequence, process the image sequence to obtain a video stream, and send the video stream to the electronic device 101 and the electronic device 103 by using the server 106. The electronic device 101 and the electronic device 103 may receive the video stream sent by the electronic device 102, perform corresponding processing on the video stream, and play the video stream.

In this embodiment of this application, when a video call is made between an electronic device and a plurality of peer devices by using the first app, the electronic device may negotiate different parameters with different peer devices, use different parameters to collect an image sequence, process the image sequence, to obtain a plurality of video streams, and then separately send processed video streams to the different peer devices. For example, during a video call among the electronic device 101, the electronic device 102, and the electronic device 103, the electronic device 101 may separately negotiate different parameters with the electronic device 102 and the electronic device 103, and use different parameters to collect an image sequence, and process the image sequence to obtain two video streams. Then, the two video streams are separately sent to the electronic device 102 and the electronic device 103.

During the video call, if a new peer device joins the video call, the electronic device may further use a parameter negotiated with the new peer device to collect the image sequence, process the image sequence to obtain a video stream, and send the video stream to the new peer device.

The following describes a structure of an electronic device 200 according to an embodiment of this application.

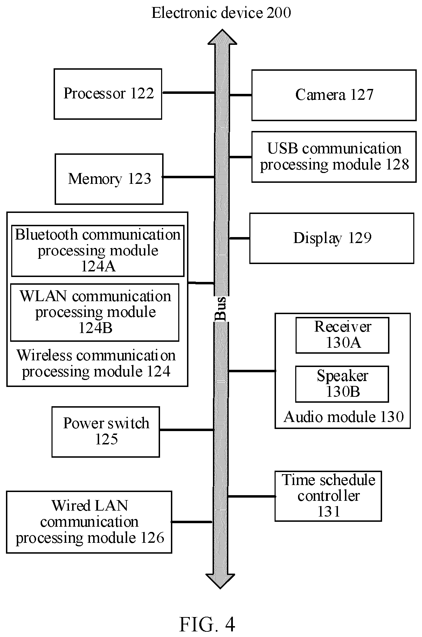

FIG. 4 shows an example of a structure of the electronic device 200 according to an embodiment of this application. The electronic device 200 may be any electronic device in the communication system 100 shown in FIG. 3.

As shown in FIG. 4, the electronic device 200 may include a processor 122, a memory 123, a wireless communication processing module 124, a power switch 125, a wired LAN communication processing module 126, a camera 127, a USB communication processing module 128 and a display 129, an audio module 130, and a time schedule controller 131. Specifically:

It should be understood that the electronic device 200 may have more or fewer components than those shown in the figure, may combine two or more components, or may have different component configurations. Components shown in the figure may be implemented by hardware including one or more signal processing and/or application-specific integrated circuits, software, or a combination of hardware and software.

The processor 122 may be configured to read and execute computer-readable instructions. In a specific implementation, the processor 122 may mainly include a controller, an arithmetic unit, and a register. The controller is mainly responsible for decoding instructions and sending a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. In a specific implementation, a hardware architecture of the processor 122 may be an application-specific integrated circuit (ASIC) architecture, an MIPS architecture, an ARM architecture, an NP architecture, or the like.

In some embodiments, the processor 122 may be configured to parse signals received by the wireless communication processing module 124 and/or the wired LAN communication processing module 126, for example, a video call request, an image sequence collection request, a video stream processing request (3D noise reduction, encoding and decoding, and the like) sent by the electronic device 200, a video stream transmission request, and a video stream playback request. The processor 122 may be configured to perform a corresponding processing operation based on a parsing result, for example, driving, based on the video call request, the camera 127 to obtain an image, or driving, based on a display request or a display instruction, the display 129 to perform display.

In some embodiments, the processor 122 may be further configured to generate a signal sent by the wireless communication processing module 124 and/or the wired LAN communication processing module 126 to the outside, for example, a video call enabling signal or a parameter negotiation signal.

The memory 123 is coupled to the processor 122, and is configured to store various software programs and/or a plurality of sets of instructions. In a specific implementation, the memory 123 may include a high-speed random access memory, and may further include a nonvolatile memory, for example, one or more magnetic disk storage devices, a flash memory device, or another nonvolatile solid-state storage device. The memory 123 may store an operating system, for example, an embedded operating system such as a real time multi-tasking operating system (real time multi-tasking operating system, uCOS). The memory 123 may further store a video call program, and the video call program may be used to make a video call with the electronic device 200, one or more servers, or an additional device.

In some embodiments, the electronic device 200 may include one or N cameras 127, where N is a positive integer greater than 1. The camera 127 is configured to capture a static image or a video. During a video call, the camera 127 may be configured to collect an image sequence, process a video stream, and the like. Herein, for how the camera 127 completes a process of collecting an image sequence, processing the image sequence, outputting a video stream, and the like, refer to detailed descriptions in subsequent method embodiments. Details are not described herein again.

The wireless communication processing module 124 may include one or more of a Bluetooth (Bluetooth, BT) communication processing module 124A and a WLAN communication processing module 124B, and is configured to establish a wireless communication connection to a server 106 that provides an instant messaging service.

The wireless communication processing module 124 may be configured to send, to another electronic device, a video stream collected and processed by the camera 127. For example, the electronic device 101 may send the video stream to the electronic device 102 and the electronic device 103 by using the wireless communication processing module.

The wireless communication processing module 124 is further configured to receive a video stream sent by another electronic device. For example, the electronic device 101 may receive video streams sent by the electronic device 102 and the electronic device 103.

The power switch 125 may be configured to control a power supply to supply power to the electronic device 200.

The wired LAN communication processing module 126 may be configured to communicate with another device in a same LAN through a wired LAN, for example, making a video call, and may be further configured to connect to a WAN by using the wired LAN, to communicate with a device in the WAN.

The USB communication processing module 128 may be configured to communicate with another device through a USB interface (not shown).

The display 129 may be configured to display an image, a video stream, and the like. The display 129 may be a liquid crystal display (liquid crystal display, LCD), an organic light-emitting diode (organic light-emitting diode, OLED) display, an active-matrix organic light emitting diode (active-matrix organic light emitting diode, AMOLED) display, a flexible light-emitting diode (flexible light-emitting diode, FLED) display, a quantum dot light emitting diode (quantum dot light emitting diode, QLED) display, or the like.

In this embodiment of this application, the electronic device 200 may be configured to display a received video stream of another electronic device, or may be configured to display a video stream obtained after an image sequence collected by the electronic device 200 is processed. For example, in a video call process, the display 129 of the electronic device 101 may be configured to display a received video stream transmitted by the electronic device 102 and the electronic device 103, and a video stream obtained after an image sequence collected by the electronic device 101 is processed.

The audio module 130 may include one or more of a receiver 130A and a speaker 130B, and the audio module and the wireless communication processing module 124 may be coupled through a PCM bus interface. In some embodiments, alternatively, the audio module 130 may transmit an audio signal to the wireless communication processing module 124 through a PCM interface, to implement a function of answering a video call. The PCM interface may be configured to perform audio communication. One or more of the receiver 130A and the speaker 130B may be configured to convert an electrical signal into a sound signal, and correct a sound to prevent noise and sound short circuit. The audio module 130 is configured to convert digital audio information into an analog audio signal output, and is also configured to convert an analog audio input into a digital audio signal. The audio module 130 may be further configured to encode and decode an audio signal. In some embodiments, the audio module 130 may be disposed in the processor 122, or some function modules in the audio module 130 are disposed in the processor 122.

In this embodiment of this application, the audio module 130 is configured to output a sound signal during the video call. For example, the audio module 130 is configured to output a sound signal in a video stream received by the electronic device 200.

The time schedule controller 131 may be configured to control an instruction execution time of the electronic device 200, and provide various operation timing signals for instruction execution. For example, during the video call, the time schedule controller may control a video stream displayed on the display to be synchronized with a sound signal output from the audio module.

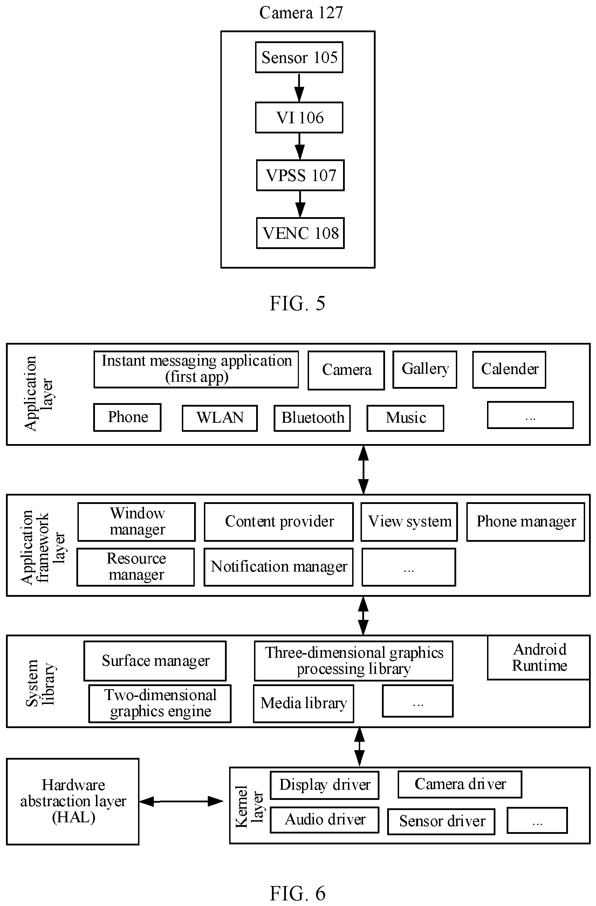

FIG. 5 is a schematic diagram of a structure of a camera 127 of an electronic device 200 according to an embodiment of this application.

The camera 127 may include a sensor (sensor) 105, a video input (video input, VI) module 106, a video process sub-system (video process sub-system, VPSS) 107, a video encoder (video encoder, VENC) 108, and the like.

It should be understood that the camera 127 may have more or fewer components than those shown in the figure, may combine two or more components, or may have different component configurations. Components shown in the figure may be implemented by hardware including one or more signal processing and/or application-specific integrated circuits, software, or a combination of hardware and software.

The sensor 105 may be a charge-coupled device (charge-coupled device, CCD) or a complementary metal-oxide-semiconductor (complementary metal-oxide-semiconductor, CMOS) optoelectronic transistor. When the camera 127 collects an image sequence, light is transferred to the sensor 105, and the sensor 105 is configured to convert an optical signal into an electrical signal. In this embodiment of this application, the sensor 105 may collect the image sequence based on a parameter that is of a video stream and that is negotiated between electronic devices.

After collecting the image sequence, the sensor 105 may transmit the collected image sequence to the VI 106.

The VI 106 is configured for image signal processing and optimization, including functions such as noise reduction and preprocessing.

The collected image sequence that is processed and optimized by the VI 106 may be transmitted to the VPSS.

The VPSS 107 is configured to implement image sequence processing functions. The functions include video blocking, 3D noise reduction, video mosaic processing, video cropping, scaling, luminance single component processing, aspect ratio conversion, and the like.

The image sequences processed by the VPSS 107 may be transmitted to the VENC 108.

The VENC 108 may be configured to process, based on parameters negotiated with different peer devices, the image sequence transmitted by the VPSS 107. In some embodiments, the VENC 108 may be configured to encode, in a general format such as H.261, H.263, H.264, or a JPEG format (Joint Photographic Experts Group, JPEG), the image sequence transmitted by the VPSS 107. In some embodiments, the VENC 108 is further configured to compress the image sequence transmitted by the VPSS 107, to obtain video streams with different resolutions. The VENC 108 is further configured to delete or copy an image frame in the image sequence transmitted by the VPSS 107, to obtain video streams with different frame rates. The VENC 108 is further configured to compress the image sequence transmitted by the VPSS 107, to obtain video streams with different bit rates.

In this embodiment of this application, the VENC 108 supports real-time encoding of a plurality of video streams, and each video stream is independently encoded. That is, the VENC 108 may separately encode, by using different parameters, the video streams transmitted by the VPSS 107, so as to obtain the plurality of video streams.

In this embodiment of this application, a plurality of channels may be established between the VENC 108 and the HAL. The plurality of channels correspond to the plurality of peer devices that make a video call with the electronic device 200. This channel is used to transmit the video stream processed by the VENC108 based on the parameter negotiated with the corresponding peer device to the HAL.

In some embodiments, the camera 127 may further distribute, to each module, a parameter that the electronic device 200 negotiates with another device in the video call. For example, a processor may be further disposed in the camera 127, and the processor is configured to distribute the parameter.

An example in which the electronic device 101, the electronic device 102, and the electronic device 103 simultaneously make a video call is used for description. If the electronic device 101 negotiates a first parameter with the electronic device 102, and the electronic device 101 negotiates a second parameter with the electronic device 103:
if the first parameter includes a first encoding and decoding format, and the second parameter includes a second encoding and decoding format, the camera 127 sends the first encoding and decoding format and the second encoding and decoding format to the VENC 108;
if the first parameter includes first resolution, the second parameter includes second resolution, and the first resolution is greater than the second resolution, the camera 127 distributes the first resolution to the sensor 105, and distributes the first resolution and the second resolution to the VENC 108;
if the first parameter includes a first frame rate, the second parameter includes a second frame rate, and the first frame rate is greater than the second frame rate, the camera 127 distributes the first frame rate to the sensor 105, and distributes the first frame rate and the second frame rate to the VENC 108; and
if the first parameter includes a first bit rate, and the second parameter includes a second bit rate, the camera 127 distributes the first bit rate and the second bit rate to the VENC 108.

In some embodiments, the camera 127 in the electronic device 200 shown in FIG. 5 may also be implemented as a camera module of software. For example, the VENC 108 in the camera 127 may be implemented in a form of software, and the VI 106 and the VPSS 107 in the camera 127 may also be implemented in a form of software. When the VENC 108 in the camera 127 is implemented in a form of software, the camera 127 is a camera module. For a function of the camera module, refer to related descriptions in FIG. 5 and subsequent embodiments.

FIG. 6 is a diagram of a software structure of an electronic device 200 according to an embodiment of this application.

In a layered architecture, software is divided into several layers, and each layer has a clear role and task. The layers communicate with each other through a software interface. In some embodiments, the system is divided into four layers, namely, an application layer, an application framework layer, a runtime (Runtime) layer, a system library, a kernel layer, and a hardware abstraction layer (HAL) from top to bottom.

The application layer may include a series of application packages.

As shown in FIG. 6, the application packages may include application programs (which may also be referred to as applications) such as Camera, Gallery, Calendar, Phone, WLAN, Bluetooth, and Music.

In this embodiment of this application, the application layer further includes an instant messaging application (a first app). The first app is configured to perform a video call between electronic devices, detect and respond to a video call operation of a user, establish a video call service channel between the electronic device 200 and another electronic device, and invoke a camera 127 of the electronic device 200 to collect an image sequence.

The application framework layer provides an application programming interface (application programming interface, API) and a programming framework for an application at the application layer. The application framework layer includes some predefined functions.

As shown in FIG. 6, the application framework layer may include a window manager, a content provider, a view system, a phone manager, a resource manager, a notification manager, and the like.

The window manager is configured to manage a window program. The window manager may obtain a size of a display, and determine whether there is a notification bar, a status bar, screen locking, screen capturing, or the like of the first app.

The content provider is configured to: store and obtain data, and enable the data to be accessed by an application. The data may include a video, audio, a call (a voice call or a video call), a browsing history and a bookmark, a phone book, and the like.

The view system includes visual controls such as a control for displaying a text and a control for displaying an image. The view system may be configured to construct an application. A display interface may include one or more views. For example, a display interface including a video call notification icon may include a view for displaying a video.

The phone manager is configured to provide a communication function of the electronic device 200, for example, video call status management (including connecting, hanging up, and the like).

The resource manager provides various resources for the application, such as a video stream file, a localized string, an icon, an image, and a layout file.

The notification manager enables an application to display notification information in a status bar, and may be configured to convey and notify a type message. The notification manager may automatically disappear after a short pause without requiring a user interaction. For example, the notification manager is configured to notify starting, performing, and ending of a multi-video call, download completion, and a message reminder. The notification manager may alternatively be a notification that appears in a top status bar of the system in a form of a graph or a scroll bar text, for example, a notification of an application running on the background, or may be a notification that appears on the display in a form of a dialog interface. For example, text information is displayed in the status bar, an announcement is given, the electronic device vibrates, or the indicator light blinks.

The runtime (runtime) includes a core library and a virtual machine. The runtime is responsible for scheduling and management of the system.

The core library includes two parts: a performance function that needs to be invoked by a programming language (for example, Java language), and a system core library.

The application layer and the application framework layer run on the virtual machine. The virtual machine executes programming files (for example, Java files) of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a two-dimensional graphics engine (for example, SGL).

The surface manager is configured to: manage a display subsystem and provide fusion of two-dimensional (2-Dimensional, 2D) and three-dimensional (3-Dimensional, 3D) layers for a plurality of applications.

The media library supports playback and recording in a plurality of commonly used audio and video formats, and static image files. The media library may support a plurality of audio and video encoding formats, for example, MPEG4, H.264, MP3, AAC, AMR, JPG, and PNG.

The three-dimensional graphics processing library is configured to implement 3D graphics drawing, image rendering, composition, layer processing, and the like. The 2D graphics engine is a drawing engine for 2D drawing.

The kernel layer is a layer between hardware and software. The kernel layer includes at least a display driver, a camera driver, an audio driver, and a sensor driver.

The HAL is an interface layer located between a kernel layer of an operating system and hardware (for example, a camera 127) of the electronic device 200, and is intended to abstract the hardware and provide a virtual hardware platform for the operating system.

According to the claimed invention, the HAL may include a camera proxy (camera proxy) module. The camera proxy module is configured to transfer, to the camera 127, parameters that are separately negotiated between the electronic device 200 and a plurality of peer devices before the video call, for example, resolution, a frame rate, an encoding format, and a bit rate, so that the camera 127 collects and processes a video stream by using a corresponding parameter. In some embodiments, the camera proxy module may be further configured to establish a plurality of channels with the camera 127. The plurality of channels correspond to the plurality of peer devices that make a video call with the electronic device 200. This channel is used to transmit the video streams processed by the VENC 108 based on a parameter negotiated with a corresponding peer device to the camera proxy module.

In this embodiment of this application, the camera proxy module may communicate with the camera 127 by using an extended universal serial bus (universal serial bus, USB) video (USB video class, UVC) protocol. For example, the extended UVC protocol may be used to transfer parameters that are separately negotiated between the electronic device 200 and a plurality of peer devices before a video call.

In this embodiment of this application, the camera proxy module is further configured to transmit the received video stream to the first app, so that the electronic device 200 transmits the video stream to the peer device when making a video call based on the first app.

The following describes several parameters in embodiments of this application. All these parameters may be negotiated by the plurality of electronic devices in the video call. These parameters are briefly described below.

### 1. Resolution

The resolution of a video stream refers to a quantity of pixels included in each inch of a bitmap image. Higher resolution indicates a clearer image.

In a video call process, a sensor 105 in the camera 127 of the electronic device (for example, the electronic device 101) that collects the image sequence determines resolution of the collected image sequence. Specifically, the sensor 105 may include a plurality of light sensitive units, each light sensitive unit corresponds to one pixel, and the light sensitive unit is configured to collect an image. A larger quantity of light sensitive units used by the camera 127 when shooting an image indicates higher resolution of the collected video stream.

It is clearly that, the quantity of light sensitive units in the sensor 105 determines maximum resolution supported by the electronic device in collecting the image sequence.

In addition, after the sensor 105 of the camera 127 collects the image sequence, the VENC 108 in the camera 127 may also compress the image sequence collected by the sensor 105, to reduce resolution of the image sequence, so as to output a video stream with resolution required by the peer device.

In the video call process, a hardware structure of an electronic device (for example, the electronic device 102) that plays a video stream and a network condition determine resolution of a video stream that can be played on the electronic device. For example, a smaller pitch of a display 129 indicates a larger memory or hard disk space of the electronic device, or a better network condition indicates higher resolution of a video stream that can be played on the electronic device. Herein, the network condition may include network bandwidth, signal strength, and the like of the electronic device.

Generally, in the video call process, an electronic device that collects an image sequence need to negotiate resolution with an electronic device that plays the video stream. The negotiated resolution may be resolution supported by both the electronic device that collects an image sequence in collecting the image sequence and the electronic device that plays a video stream in playing the video stream, for example, maximum resolution supported by both the electronic devices.

### 2. Encoding and decoding format

The encoding and decoding format refers to a mode of converting a file in an original video stream format into a file in another video stream format. For example, H.261, H.263, H.264, and H.265.

In the video call process, the VENC 108 in the electronic device (for example, the electronic device 101) that collects the image sequence may encode the image sequence based on an encoding and decoding format required by the peer device. Generally, the VENC 108 of a same electronic device may support a plurality of encoding and decoding formats. Encoding and decoding formats supported by VENC 108s of different electronic devices may be the same or may be different.

In the video call process, a hardware structure of an electronic device (for example, the electronic device 102) that plays a video stream determines an encoding and decoding format of a video stream that can be played on the electronic device. For example, a codec may be disposed in the electronic device, and the codec may support one or more encoding and decoding formats of the video stream.

Generally, in the video call process, the electronic device that collects an image sequence and the electronic device that plays the video stream need to negotiate an encoding and decoding format. The negotiated encoding and decoding format may be an encoding and decoding format supported by both the electronic device that collects an image sequence and the electronic device that plays the video stream, for example, an encoding and decoding format in which a data volume of a video stream obtained after the image sequence is encoded is smaller in encoding and decoding formats that are supported by both the electronic devices.

### 3. Frame rate

The frame rate refers to a quantity of frames of an image collected or displayed per unit time. An image frame is a static image, and a video stream includes a plurality of fast and continuous image frames. A higher frame rate of the video stream indicates a smoother video stream played on the peer device.

In the video call process, the sensor 105 in the camera 127 of the electronic device (for example, the electronic device 101) that collects the image sequence determines a frame rate of the collected image sequence. Specifically, the sensor 105 may control a quantity of image frames collected within a unit time. A larger quantity of image frames collected indicates a higher frame rate of a video stream.

In addition, after the sensor 105 of the camera 127 collects the image sequence, the VENC 108 may control a frame rate of the image sequence. Specifically, the VENC 108 may process, based on the frame rate in the negotiated parameter, the image sequence collected by the sensor 105, for example, delete or copy some image frames, so as to output a video stream at a frame rate required by the peer device.

In the video call process, a hardware structure of an electronic device (for example, the electronic device 102) that plays a video stream and a network condition determine a frame rate of a video stream that can be played on the electronic device. For example, a larger memory or hard disk space of the electronic device, or a better network condition indicates a higher frame rate of a video stream that can be played on the electronic device.

Generally, in the video call process, an electronic device that collects an image sequence need to negotiate a frame rate with an electronic device that plays the video stream. The negotiated frame rate may be a frame rate supported by both the electronic device that collects an image sequence in collecting the image sequence and the electronic device that plays a video stream in playing the video stream, for example, a maximum frame rate supported by both the electronic devices.

### 4. Bit rate

The bit rate refers to a size of video stream data transmitted in a unit time. With the same resolution and frame rate, a higher bit rate indicates a smoother video stream.

In the video call process, after the sensor 105 of the camera 127 collects an image sequence, the VENC 108 may control a bit rate of the image sequence. Specifically, the VENC 108 may compress the bit rate of the image sequence based on the bit rate in the negotiated parameter, for example, delete a same background in the image sequence, and keep only a changed part of a character image, that is, delete a redundant part in the image sequence, so as to output a video stream at a bit rate required by the peer device. In some embodiments, a first app installed in the electronic device may also be configured to control the bit rate of the video stream.

In the video call process, a hardware structure of an electronic device (for example, the electronic device 102) that plays a video stream and a network condition determine a bit rate of a video stream that can be played on the electronic device. For example, a larger memory or hard disk space of the electronic device, or a better network condition indicates a higher bit rate of a video stream that can be played on the electronic device.

Generally, in the video call process, an electronic device that collects an image sequence need to negotiate a bit rate with an electronic device that plays the video stream. The negotiated bit rate may be a bit rate supported by both a device that collects an image sequence in processing the image sequence and a device that plays a video stream in playing the video stream, for example, a maximum bit rate supported by both the devices.

In the following embodiments of this application, a parameter supported by the electronic device (for example, the electronic device 102) that plays the video stream in playing a video stream may include an encoding format, maximum resolution, a maximum bit rate, or a maximum frame rate that are supported when the video stream is played.

In the following embodiments of this application, a parameter supported by the electronic device (for example, the electronic device 101) that collects the image sequence in collecting an image sequence may include an encoding format, maximum resolution, a maximum bit rate, or a maximum frame rate that are supported when the image sequence is collected.

The following describes the video call method in embodiments of this application with reference to the communication system 100, the software and hardware structures of the electronic device 200, and the camera 127 of the electronic device 200.

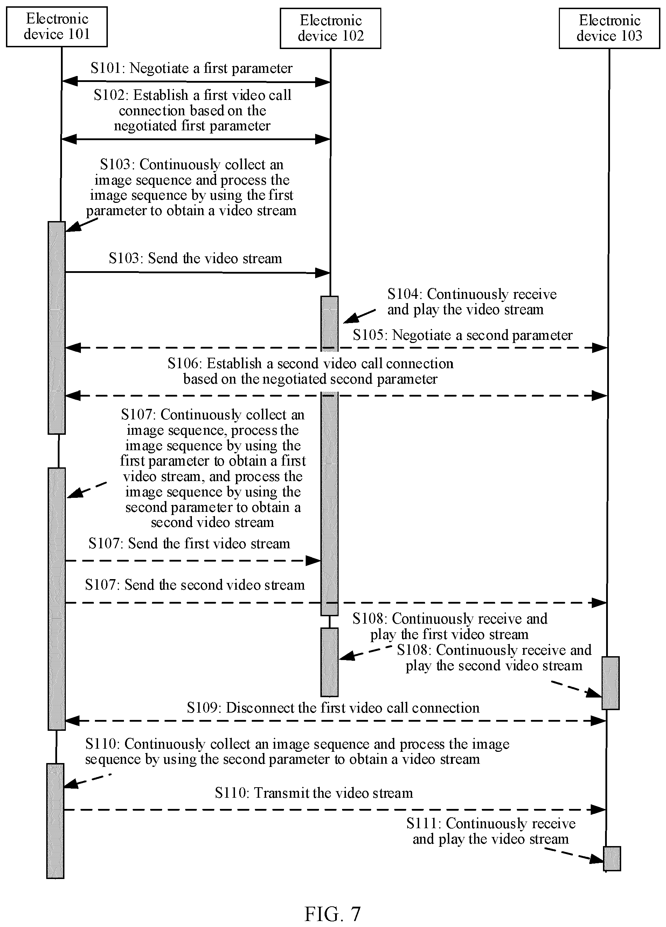

FIG. 7 shows an overall process of a video call method. As shown in FIG. 7, the method may include the following steps.

S101 to S103 are a process of making a video call between the electronic device 101 and the electronic device 102.

S101: The electronic device 101 negotiates a first parameter with the electronic device 102.

Specifically, before establishing a video call connection, the electronic device 101 and the electronic device 102 negotiate a parameter, and notify each other of a supported parameter. For example, the electronic device 102 may send, to the electronic device 101, a parameter supported in playing a video stream, and the electronic device 101 determines a first parameter based on a parameter supported in collecting and processing an image sequence and the parameter supported by the electronic device 102 in playing the video stream. Then, the electronic device 101 may send the determined first parameter to the electronic device 102. Herein, for the parameter supported by the electronic device in playing the video stream, and the parameter supported by the electronic device in collecting and processing the image sequence, refer to the foregoing related descriptions.

It can be understood that the negotiation process of the first parameter may be performed in another manner, which is not limited herein.

The first parameter may include one or more of the following: first resolution or a first encoding and decoding format. In some embodiments, the first parameter may further include a first bit rate and a first frame rate.

The first resolution may be resolution supported by both the electronic device 101 in collecting an image sequence and the electronic device 102 in playing a video stream, for example, maximum resolution supported by both the electronic devices. For example, if maximum resolution supported by the electronic device 101 in collecting an image sequence is 4k, and resolution supported by the electronic device 102 in playing a video stream is 2k, the negotiated first resolution may be 2k or less than 2k.

The first encoding and decoding format may be an encoding and decoding format supported by both the electronic device 101 in processing the image sequence to obtain a video stream and the electronic device 102 in playing the video stream, for example, an encoding and decoding format in which a data volume of a video stream obtained after the image sequence is encoded is smaller in encoding and decoding formats that are supported by both the electronic devices. For example, if the encoding and decoding formats supported by the electronic device 101 in processing the image sequence are H.264 and H.265, the encoding and decoding formats supported by the electronic device 102 in playing a video stream are H.263, H.264, and H.265, and after a same video stream is encoded, a data volume of the video stream encoded by using H.265 is the smallest, the negotiated first encoding and decoding format may be H.265 or H.264.

The first bit rate may be a bit rate supported by both the electronic device 101 in processing the image sequence to obtain a video stream and the electronic device 102 in playing the video stream, for example, a maximum bit rate supported by both the electronic devices. For example, if a maximum bit rate supported by the electronic device 101 in processing an image sequence is 20 Mb/s, and a maximum bit rate supported by the electronic device 102 in playing a video stream is 10 Mb/s, the negotiated first encoding and decoding format may be 10 Mb/s or less than 10 Mb/s.

The first frame rate may be a frame rate supported by both the electronic device 101 in collecting an image sequence and the electronic device 102 in playing a video stream, for example, a maximum frame rate supported by both the electronic devices. For example, if a maximum frame rate supported by the electronic device 101 in collecting an image sequence is 50 fps, a maximum frame rate supported in transmitting a video stream is 50 fps, and a frame rate supported by the electronic device 102 in playing the video stream is 30 fps, the negotiated first frame rate may be 30 fps or less than 30 fps.

S102: The electronic device 101 and the electronic device 102 establish a video call connection based on the negotiated first parameter.

In some embodiments, after the electronic device 101 negotiates the first parameter with the electronic device 102, the electronic device 101 may initiate a video call request to the electronic device 102 in a process of running a first app. After the electronic device 102 agrees to the video call request, a video call connection may be successfully established between the electronic device 101 and the electronic device 102.

In some other embodiments, the electronic device 102 may initiate a video call request to the electronic device 101 in a process of running the first app. After the electronic device 101 agrees to the video call request, a video call connection may be successfully established between the electronic device 101 and the electronic device 102.

Specifically, the electronic device 101 and the electronic device 102 may establish the video call connection based on a cellular mobile communication technology such as 3G, 4G, or 5G, a WLAN technology, or the like.

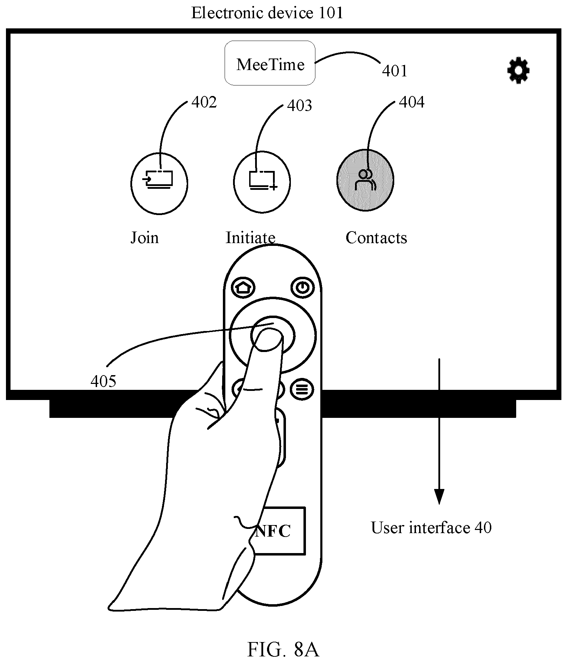

FIG. 8A to FIG. 8D and FIG. 9(a) to FIG. 10 show an example scenario in which the electronic device 101 and the electronic device 102 establish a video call connection.

FIG. 8A shows a user interface 40 displayed on an electronic device 101. The user interface 40 is a user interface used when a first app of the electronic device 101 initiates "MeeTime". The user interface 40 includes a prompt box 401, and the prompt box includes prompt text: "MeeTime", a join icon 402, an initiation icon 403, and a contact icon 404. The join icon 402 is used to use the electronic device 101 to agree to join a video call initiated by another electronic device. The initiation icon 403 is used to use the electronic device 101 to initiate a video call with another electronic device. The contact icon 404 is used to use the electronic device 101 to select an electronic device associated with a contact to make a video call. Specifically, the electronic device 101 may be connected to a remote control by using Bluetooth, an infrared ray, or the like. A user may select any icon in the user interface 42 by using the remote control, so that the electronic device 101 enables a function corresponding to the icon. For example, the contact icon 404 is selected. After an operation of a confirm key 405 of the remote control is detected, the remote control may send a signal to the electronic device 101, so that the electronic device 101 initiates a video call request in response to the operation.

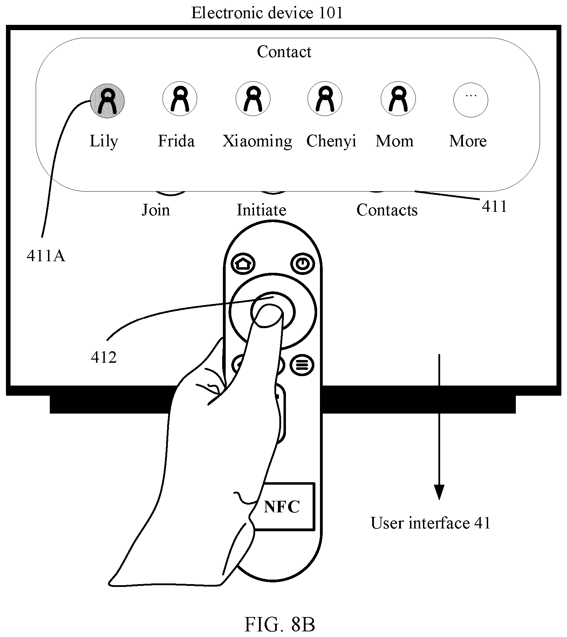

As shown in FIG. 8A, after the electronic device 101 responds to the operation of selecting the contact icon 404 by the user, the contact icon 404 is dimmed. Then, the electronic device 101 may display the user interface 41 shown in FIG. 8B in response to an operation (for example, a press operation or a tap operation) performed by the user on the confirm key 405 of the remote control.

As shown in FIG. 8B, FIG. 8B is a user interface 41 that is provided by an electronic device 101 for a user and that is used to select a contact to join a video call. The user interface 41 includes a prompt box 411, where the prompt box includes prompt text: "Contacts", and further includes a portrait icon of a contact.

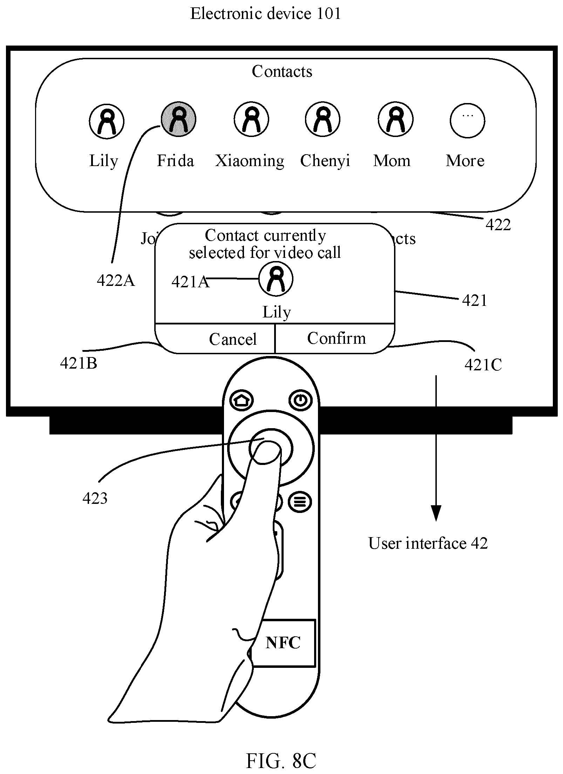

As shown in FIG. 8B, after the electronic device responds to an operation in which the user selects a portrait icon 411A of a contact Lily in the prompt box 411, the portrait icon 411A of the contact Lily is dimmed. In responds to an operation (for example, a press operation or a tap operation) performed by the user on a confirm key 412 of the remote control, the electronic device 101 receives an instruction that the user selects an electronic device 102 associated with Lily to establish a video call connection, and the electronic device 101 may display a user interface 42 shown in FIG. 8C.

As shown in FIG. 8C, a prompt box 421 pops up in the user interface 42. The prompt box 421 includes prompt text: "A contact currently selected for a video call", and further includes a portrait icon 421A of the selected contact Lily. The prompt box 421 further includes a cancel control 421B and a determining control 421C. The cancel control 421B is used to cancel the currently selected contact, and the determining control 421C is used to determine the currently selected contact.

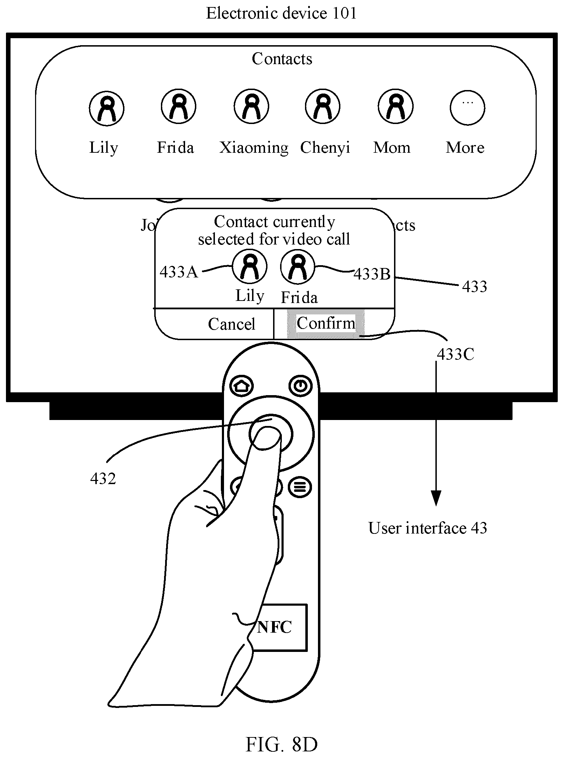

As shown in FIG. 8C, after the electronic device responds to an operation in which the user selects a portrait icon 422A of a contact Frida in the prompt box 422, the portrait icon 422A of the contact Frida is dimmed. In responds to an operation (for example, a press operation or a tap operation) performed by the user on a confirm key 423 of the remote control, the electronic device 101 receives an instruction that the user selects an electronic device 103 associated with Frida to establish a video call connection, and the electronic device 101 may display a user interface 43 shown in FIG. 8D.

As shown in FIG. 8D, the electronic device 101 displays the user interface 43. The user interface 43 includes a prompt box 433, where the prompt box includes a portrait icon 433A of the contact Lily, a portrait icon 433B of the contact Frida, and a determining control 433C.

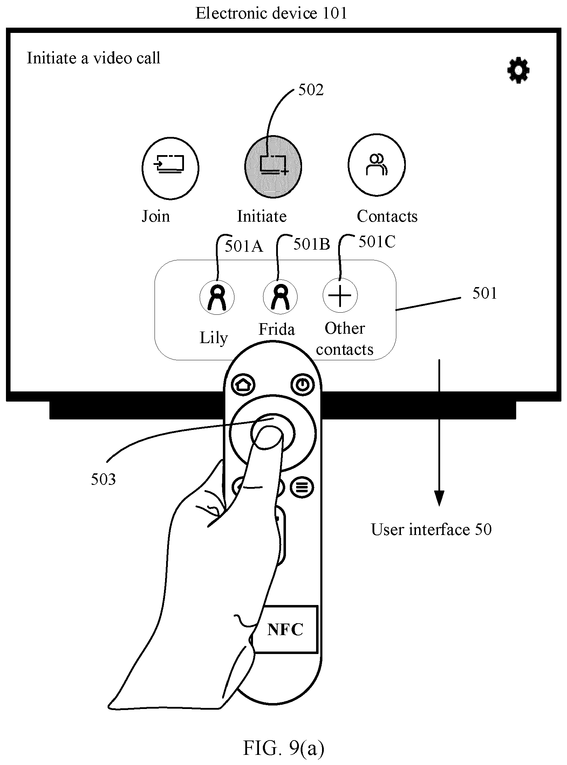

As shown in FIG. 8D, after the electronic device 101 selects the electronic device 102 associated with the contact Lily and the electronic device 103 associated with the contact Frida to establish a video call connection, the electronic device 101 responds to that the user selects the determining control 433C. In response to the operation, the determining control 433C is dimmed. The electronic device 101 may display a user interface 50 shown in FIG. 9(a) in response to an operation (for example, a press operation or a tap operation) performed by the user on a confirm key 432 of the remote control.

FIG. 9(a) is the user interface 50 displayed on the electronic device 101. As shown in FIG. 9(a), the user interface 50 pops up a prompt box 501. The prompt box 501 includes a portrait icon 501A of the contact Lily, a portrait icon 501B of the contact Frida, and an icon 501C of another contact, where an icon 502C of another contact is used to add another contact to a video call, and the user interface 50 further includes an initiation icon 502.

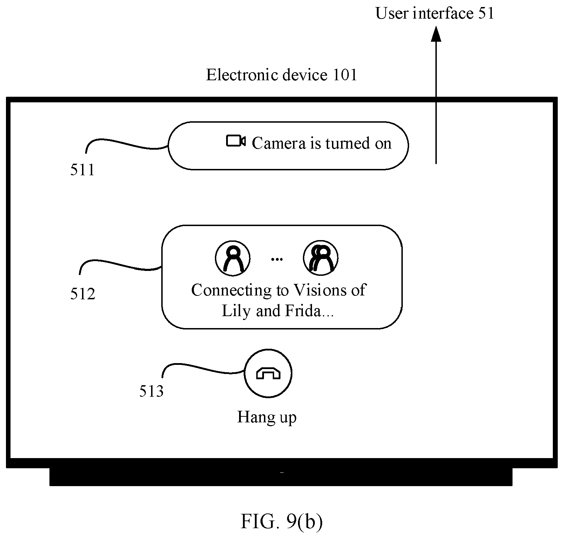

After the electronic device 101 responds to an operation of selecting the initiation icon 502 of initiating a video call by the user, the initiation icon 502 is dimmed. In responds to an operation performed by the user on a confirm key 503 of the remote control, the electronic device 101 initiates a video call request to the electronic device 102 associated with the contact Lily and the electronic device 103 associated with the contact Frida. The electronic device 101 displays a user interface 51 shown in FIG. 9(b).

As shown in FIG. 9(b), the user interface 51 may display a prompt box 511, and the prompt box 511 includes prompt text: "The camera is turned on". A prompt box 512 may be further displayed on the user interface, and the prompt box 512 includes prompt text: "Connecting to Visions of Lily and Frida". A hang-up control 513 may be further displayed, where the control 513 is configured to end an initiated video call.

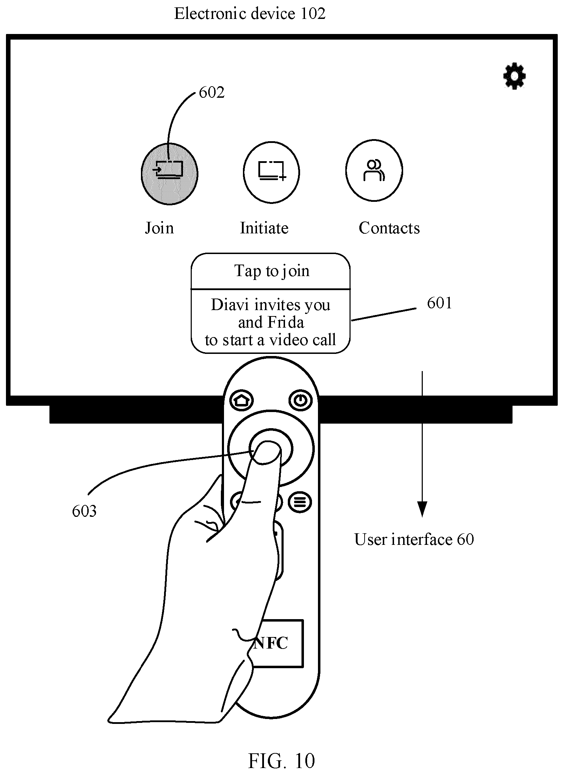

The electronic device 101 initiates a request for establishing a video call to the electronic device 102 associated with the contact Lily and the electronic device 103 associated with the contact Frida, and after the electronic device 102 receives the request, the electronic device 102 may display a user interface 60 shown in FIG. 10, and a prompt box 601 may be displayed on the user interface. The prompt box 601 includes prompt text: "Diavi invites you and Frida to start a video call."

As shown in FIG. 10, after the electronic device 102 responds to an operation of selecting a join icon 602 of joining a video call by the user, the join icon 602 is dimmed. The electronic device 102 establishes a video call connection to the electronic device 101 in response to an operation (for example, a press operation or a tap operation) performed by the user on a confirm key 603 of the remote control.

S103: The electronic device 101 collects and processes an image sequence by using the first parameter, to obtain a video stream, and sends the video stream to the electronic device 102.

First, the electronic device 101 may start the camera 127, and the sensor 105 in the camera 127 collects the image sequence.

If the first parameter includes first resolution, the sensor 105 in the camera 127 collects the image sequence at the first resolution, that is, the sensor 105 collects the image sequence by using a light sensitive unit corresponding to the first resolution. If the first parameter does not include the first resolution, the sensor 105 in the camera 127 may collect the image sequence at default resolution.

If the first parameter includes a first frame rate, the sensor 105 in the camera 127 collects the image sequence at the first frame rate. That is, the sensor 105 collects, within a unit time, image frames corresponding to the first frame rate. If the first parameter does not include the first frame rate, the sensor 105 in the camera 127 may collect the image sequence at a default frame rate.

Then, the sensor 105 may send the collected image sequence to a VENC 108. After receiving the image sequence, the VENC 108 may process the image sequence to obtain a video stream.

In some embodiments, the VENC 108 may use the first parameter to process the image sequence. The processing may include one or more of the following:
if the first parameter includes a first encoding and decoding format, the VENC 108 encodes the image sequence in the first encoding and decoding format, to obtain the video stream;
if the first parameter includes the first resolution, when the first resolution is lower than the resolution of the image sequence collected by the sensor 105, the VENC 108 compresses the image sequence, so that the resolution of the image sequence is equal to the first resolution, and outputs a video stream; or when the first resolution is equal to the resolution of the image sequence collected by the sensor 105, the VENC 108 does not perform compression processing on the image sequence, and directly outputs a video stream at the first resolution;
if the first parameter includes the first frame rate, the VENC 108 may delete or copy some image frames in the image sequence to obtain a video stream, so that a frame rate of the obtained video stream is equal to the first frame rate. It can be understood that if the frame rate of the image sequence collected by the sensor 105 is greater than the first frame rate, the VENC 108 deletes some image frames in the image sequence; or if the frame rate of the image sequence collected by the sensor 105 is less than the first frame rate, the VENC 108 copies some image frames in the image sequence. In this way, the frame rate of the video stream output by the VENC 108 may be equal to the first frame rate; and
if the first parameter includes a first bit rate, the VENC 108 compresses the image sequence, so that a bit rate of the image sequence is equal to the first bit rate, so as to obtain a video stream.

In some other embodiments, the VENC 108 may use a default parameter to process the image sequence. The processing may include one or more of the following:
if the first parameter does not include a first encoding and decoding format, the VENC 108 encodes the image sequence in a default encoding and decoding format, so as to obtain a video stream;
if the first parameter does not include the first resolution, when the default resolution is lower than the resolution of the image sequence collected by the sensor 105, the VENC 108 may compress the image sequence, so that the resolution of the image sequence is equal to the default resolution; or when the default resolution is equal to the resolution of the image sequence collected by the sensor 105, the VENC 108 does not perform compression processing on the image sequence, and directly outputs a video stream at the default resolution;
if the first parameter does not include the first frame rate, the VENC 108 may delete or copy some image frames in the image sequence to obtain a video stream, so that a frame rate of the obtained video stream is equal to the default frame rate. It can be understood that, if the frame rate of the image sequence collected by the sensor 105 is greater than the default frame rate, the VENC 108 deletes some image frames in the image sequence; or if the frame rate of the image sequence collected by the sensor 105 is less than the default frame rate, the VENC 108 copies some image frames in the image sequence, so that a frame rate of a video stream output by the VENC 108 is equal to the default frame rate; and
if the first parameter does not include the first encoding and decoding format, the VENC 108 compresses the image sequence at the default bit rate, to obtain a video stream.

In some embodiments, the sensor 105 may first send the collected image sequence to the VI 106 for noise reduction, preprocessing, and the like, then send the collected image sequence to the VPSS 107 for processing such as 3D noise reduction and video cropping, and then send the collected image sequence to the VENC 108 for processing.

Then, the VENC 108 may transmit the processed video stream to the electronic device 102.

The default resolution mentioned above may be, for example, the maximum resolution supported by the electronic device 101 in collecting the image sequence. The default encoding and decoding format may be any encoding and decoding manner supported by the electronic device 101. The default bit rate may be any bit rate supported by the electronic device 101. The default frame rate may be any frame rate supported by the electronic device 101. This is not limited in this embodiment of this application.

In some embodiments, after the electronic device 101 establishes the video call connection based on the first parameter negotiated with the electronic device 102, a camera proxy module at the HAL of the electronic device 101 may obtain the first parameter, and transfer the first parameter to the camera 127, so that the camera 127 learns of the first parameter, and uses the first parameter to collect an image sequence, process the image sequence, and obtain a video stream. In addition, the camera proxy module at the HAL of the electronic device 101 may further establish a first channel corresponding to the electronic device 102. The first channel is from the VENC 108 in the camera 127 to the camera proxy module at the HAL. The first channel is used to transmit, by using the VENC 108, a video stream that is collected and processed by the electronic device 101 by using the first parameter to the camera proxy module. In this embodiment of this application, the camera proxy module and the camera 127 may communicate with each other by using an extended UVC protocol. The UVC extension protocol will be described in detail in a subsequent embodiment, and details are not described herein.

In some embodiments, the camera proxy module may transmit the received video stream to the first app at an application layer, so that the electronic device 101 transmits the video stream to the electronic device 102 in a process of running the first app. In some implementations, alternatively, the first app may process the received video stream based on an actual requirement, for example, compress the received video stream to reduce resolution thereof. This is not limited herein.

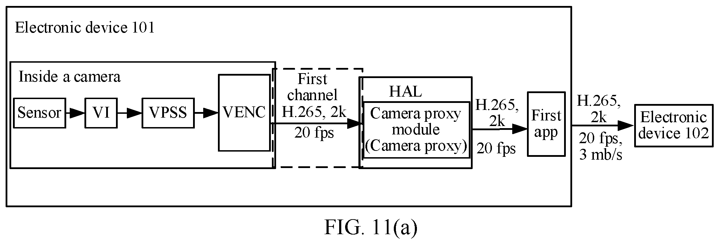

FIG. 11(a) to FIG. 11(c) are a schematic diagram of an electronic device 101 establishing/deleting a transmission channel for a video stream.

For example, FIG. 11(a) shows an example of a first channel established by the electronic device 101 and a process in which the electronic device 101 collects an image sequence, processes the image sequence to obtain a video stream, and transmits the video stream.

For example, the VENC 108 of the electronic device 101 uses the first parameter to process the image sequence, and outputs a video stream with a decoding format of H.265, resolution of 2k, and frame rate of 20 fps to the camera proxy module. After receiving the video stream, the camera proxy module transmits the video stream to the first app, and then the first app transmits the video stream to the electronic device 102 at a bit rate of 3 mb/s.

S104: The electronic device 102 receives the video stream sent by the electronic device 101, and plays the video stream.

Specifically, after receiving the video stream sent by the electronic device 101, the electronic device 102 may decode the video stream in the first encoding and decoding format of the first parameter. Then, the electronic device 102 may play the video stream by using a display, an audio device, or the like.

In some embodiments, if the first parameter includes the first bit rate, the electronic device 102 may receive the video stream at the first bit rate; or if the first parameter does not include the first bit rate, the electronic device 102 may receive the video stream at the default bit rate.

In some embodiments, if the first parameter includes the first resolution, the electronic device 102 may play the video stream at the first resolution of the first parameter. If the first parameter does not include the first resolution, the electronic device 102 may receive the video stream at the default resolution.

In some other embodiments, if the first parameter includes the first frame rate, the electronic device 102 may play the video stream at the first frame rate of the first parameter; or if the first parameter does not include the first frame rate, the electronic device 102 may receive the video stream at the default frame rate.

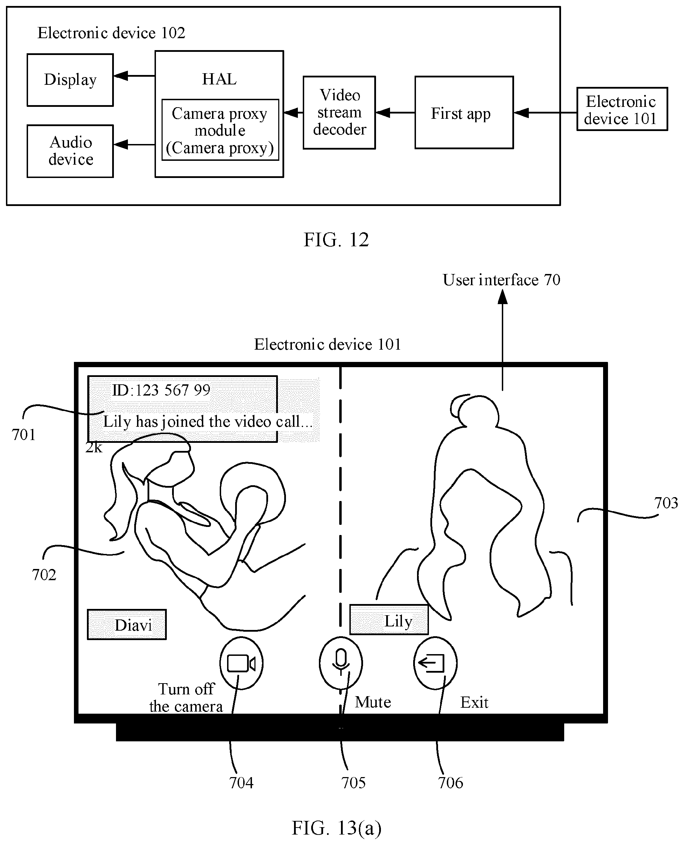

FIG. 12 is a flowchart of processing, after an electronic device 102 receives a video stream, the video stream.

FIG. 12 shows a process of processing the video stream after the electronic device 102 receives the video stream. As shown in FIG. 12, a first app in the electronic device 102 first obtains the video stream transmitted from the electronic device 101, and then the first app may transmit the video stream to a video stream decoder. The video stream decoder may decode the video stream in a first encoding and decoding format, and transmit a decoded video stream to a camera proxy module at an HAL of the electronic device 102. Then, the camera proxy module may send the video stream to a display and an audio device for playing. In some implementations, a video stream codec may be disposed at the HAL.

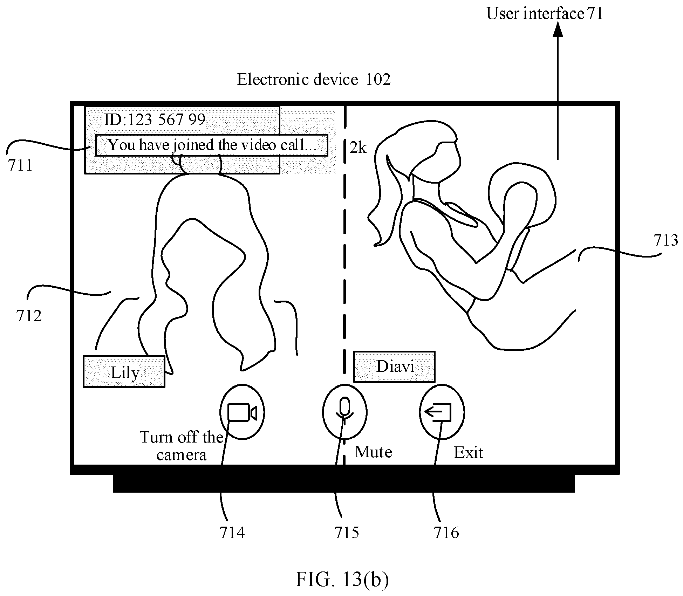

FIG. 13(a) and FIG. 13(b) show an example scenario in which an electronic device 101 and an electronic device 102 play a video stream.

FIG. 13(a) shows a user interface 70 displayed on the electronic device 101 in a process of a video call between the electronic device 101 and the electronic device 102. As shown in the figure, the user interface 70 includes a prompt box 701, where the prompt box 701 includes prompt text: "Lily has joined the video call", and a video stream 702 and a video stream 703 are displayed in the user interface 70. The video stream 702 is a video stream collected by the electronic device 101. For example, the video stream 702 is collected by the electronic device 101 by using a first parameter. The first parameter includes first resolution, and the first resolution is 2k. In this case, the resolution of the video stream 702 is 2k. The video stream 703 is a video stream received by the electronic device 101 from the electronic device 102. The user interface 70 further includes a camera turn-off control 704, a mute control 705, and an exit control 706. The camera turn-off control 704 is used to control turning on and off of the camera in the video call, the mute control 705 is used to control whether there is a sound in the video call, and the exit control 706 is used to exit the video call.

FIG. 13(b) shows a user interface 71 displayed on the electronic device 102 in a process of a video call between the electronic device 101 and the electronic device 102. The user interface 71 includes a prompt box 711, where the prompt box 711 includes prompt text: "You have joined the video call", and a video stream 712 and a video stream 713 are displayed in the user interface 71. The video stream 712 is a video stream collected by the electronic device 102. The video stream 713 is a video stream received by the electronic device 102 from the electronic device 101. For example, the electronic device 102 plays the video stream 713 transmitted from the electronic device 101, and resolution of the video stream 713 is 2k. The user interface 71 further includes a camera turn-off control 714, a mute control 715, and an exit control 716.

Optional steps S105 to S107 describes a process in which an electronic device 103 joins the video call. That is, a multiparty video call among the electronic device 101, the electronic device 102, and the electronic device 103.

S105: The electronic device 101 negotiates a second parameter with the electronic device 103.

Specifically, before establishing a video call connection, the electronic device 101 and the electronic device 103 negotiate a parameter, and notify each other of a parameter supported. For example, the electronic device 103 may send, to the electronic device 101, a parameter supported in playing the video stream, and the electronic device 101 determines the second parameter based on the parameter supported in collecting and processing the image sequence and the parameter supported by the electronic device 102 in playing the video stream. A process in which the electronic device 101 and the electronic device 103 negotiate the second parameter is similar to the process in which the electronic device 101 and the electronic device 102 negotiate the first parameter in step S101. For details, refer to related descriptions. Details are not described herein again.

Then, the electronic device 101 may send the determined second parameter to the electronic device 103. Herein, for the parameter supported by the electronic device in playing the video stream, and the parameter supported by the electronic device in collecting and processing the image sequence, refer to the foregoing related descriptions.

It can be understood that the negotiation process of the second parameter may be performed in another manner, which is not limited herein.

The second parameter may include one or more of the following: second resolution or a second encoding and decoding format. In some embodiments, the second parameter may further include a second bit rate and a second frame rate.

The second resolution may be resolution supported by both the electronic device 101 in collecting an image sequence and the electronic device 103 in playing a video stream, for example, maximum resolution supported by both the electronic devices. For example, if maximum resolution supported by the electronic device 101 in collecting an image sequence is 4k, and resolution supported by the electronic device 102 in playing a video stream is 2k, the negotiated second resolution may be 2k or less than 2k.

The second encoding and decoding format may be an encoding and decoding format supported by both the electronic device 101 in processing the image sequence to obtain a video stream and the electronic device 103 in playing the video stream, for example, an encoding and decoding format in which a data volume of a video stream obtained after the image sequence is encoded is smaller in encoding and decoding formats that are supported by both the electronic devices. For example, if the encoding and decoding formats supported by the electronic device 101 in processing the image sequence are H.264 and H.265, the encoding and decoding formats supported by the electronic device 102 in playing a video stream are H.263, H.264, and H.265, and after a same video stream is encoded, a data volume of a video stream encoded by using H.265 is the smallest, the negotiated second encoding and decoding format may be H.265 or H.264.

The second bit rate may be a bit rate supported by both the electronic device 101 in processing the image sequence to obtain a video stream and the electronic device 103 in playing the video stream, for example, a maximum bit rate supported by both the electronic devices. For example, if a maximum bit rate supported by the electronic device 101 in processing an image sequence is 20 Mb/s, and a maximum bit rate supported by the electronic device 102 in playing a video stream is 10 Mb/s, the negotiated second encoding and decoding format may be 10 Mb/s or less than 10 Mb/s.

The second frame rate may be a frame rate supported by both the electronic device 101 in collecting an image sequence and the electronic device 103 in playing a video stream, for example, a maximum frame rate supported by both the electronic devices. For example, if a maximum frame rate supported by the electronic device 101 in collecting an image sequence is 50 fps, a maximum frame rate supported in transmitting a video stream is 50 fps, and a frame rate supported by the electronic device 102 in playing the video stream is 30 fps, the negotiated second frame rate may be 30 fps or less than 30 fps.

S106: The electronic device 101 and the electronic device 103 establish a video call connection based on the negotiated second parameter.

Specifically, after the electronic device 101 negotiates the second parameter with the electronic device 103, the electronic device 103 may receive, in a process of running the first app, a video call request initiated by the electronic device 101 or the electronic device 102. After the electronic device 103 agrees to the video call request, video call connections may be separately established between the electronic device 103 and the electronic device 101 and between the electronic device 103 and the electronic device 102.

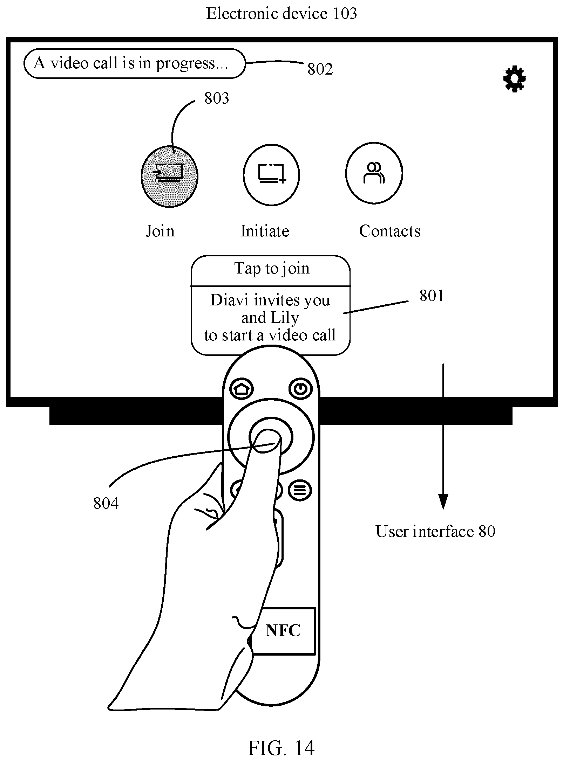

FIG. 14 is an example scenario in which an electronic device 103 joins a video call.

It is assumed that the electronic device 103 responds to the request for establishing a video call connection by the electronic device 101 only after the electronic device 101 makes a video call with the electronic device 102. After the electronic device 103 receives a request for the electronic device 101 to call the electronic device 102 associated with a contact Lily and the electronic device 103 associated with a contact Frida to establish a video call connection, the electronic device 103 may display a user interface 80 shown in FIG. 14, and may display a prompt box 801 on the user interface 80. The prompt box includes prompt text: "Diavi invites you, and Lily to start a video call". The user interface further includes a prompt box 802, and the prompt box includes prompt text: "A video call is in progress..." The user interface further includes a join icon 803.

After the electronic device 103 responds to an operation of selecting the join icon 803 of joining a video call by the user, the join icon 803 is dimmed. The electronic device 103 enters a video call initiated by the electronic device 101 in response to an operation (for example, a press operation or a tap operation) performed by the user on a confirm key 804 of a remote control, and establishes a video call connection to the electronic device 101/102.

S107: The electronic device 101 collects an image sequence, uses a first parameter to process the image sequence to obtain a first video stream, and sends the first video stream to the electronic device 102; and uses a second parameter to process the image sequence to obtain a second video stream, and sends the second video stream to the electronic device 103.

First, the electronic device 101 collects, at a larger one of first resolution/a first frame rate of the first parameter and second resolution/a second frame rate of the second parameter, the image sequence.

If the first resolution/first frame rate is less than the second resolution/second frame rate, a sensor 105 in a camera 127 of the electronic device 101 collects, at the second resolution/second frame rate, the image sequence. In this case, the electronic device 101 restarts the sensor 105, and the restarted sensor 105 collects, at the second resolution/second frame rate, the image sequence.

If the first resolution/first frame rate is greater than or equal to the second resolution/second frame rate, the sensor 105 in the camera 127 of the electronic device 101 collects the image sequence at the first resolution/first frame rate. In this case, the sensor 105 in the camera 127 does not need to be restarted.

Then, the sensor 105 may send the collected image sequence to a VENC 108. After receiving the image sequence, the VENC 108 may process the image sequence to obtain a video stream.

The processing performed by the VENC 108 on the image sequence may include the following two items: the VENC 108 uses the first parameter to process the image sequence, and outputs a first video stream; and the VENC 108 uses the second parameter to process the image sequence, and outputs a second video stream.

A specific implementation in which the VENC 108 uses the first parameter to process the image sequence is the same as a related operation in step S103 in which the VENC 108 uses the first parameter to process the image sequence. For details, refer to related descriptions. A specific implementation in which the VENC 108 uses the second parameter to process the image sequence is similar to a related operation in step S103 in which the VENC 108 uses the first parameter to process the image sequence. For details, refer to related descriptions.

At this point, the VENC outputs two video streams.

Then, the VENC 108 may transmit the first video stream to the electronic device 102, and transmit the second video stream to the electronic device 103.

In some embodiments, after the electronic device 101 establishes the video call connection based on the second parameter negotiated with the electronic device 103, a camera proxy module at the HAL of the electronic device 101 may obtain the second parameter, and transfer the second parameter to the camera 127, so that the camera 127 learns of the second parameter, and outputs the second video stream by using the second parameter. In addition, the camera proxy module at the HAL of the electronic device 101 may further establish a second channel corresponding to the electronic device 102. For a process of establishing the second channel, refer to the process of establishing the first channel in step S103. Details are not described herein again. The second channel is used to transmit the second video stream from the VENC 108 to the camera proxy module.

In some embodiments, the camera proxy module may transmit the received first video stream and second video stream to a first app at an application layer, so that the electronic device 101 transmits the first video stream to the electronic device 102, and transmits the second video stream to the electronic device 103 in a process of running the first app. In some implementations, alternatively, the first app may process the received first video stream and second video stream based on an actual requirement, for example, compress the received video stream to reduce resolution thereof. This is not limited herein.

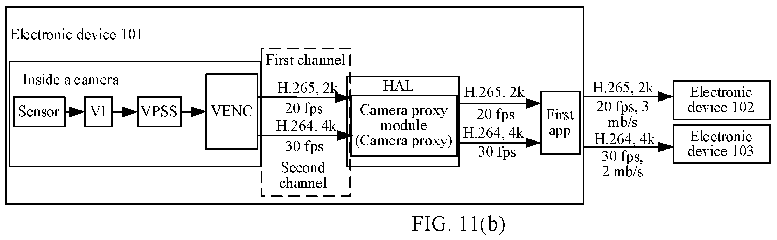

For example, FIG. 11(b) shows according to the claimed invention a first channel and a second channel established by the electronic device 101 and a process in which the electronic device 101 collects an image sequence, processes the image sequence to obtain a video stream, and transmits the video stream.

As shown in FIG. 11(b), after the electronic device 103 joins the video call, the electronic device 101 establishes the second channel used to transmit a video stream to the electronic device 103.

According to the claimed invention, the VENC 108 of the electronic device 101 separately uses the first parameter and the second parameter to process the image sequence, and outputs two video streams. The first video stream is with an encoding format of H.265, resolution of 2k, and a frame rate of 20 fps. The second video stream is with an encoding format of H.264, resolution of 4k, and a frame rate of 30 fps. Then, the first video stream is transmitted to the first app through the first channel, and the first app transmits the first video stream to the electronic device 102 at a bit rate of 3 mb/s. In addition, the second video stream is transmitted to the first app through the second channel, and the first app transmits the second video stream to the electronic device 103 at a bit rate of 2 mb/s.

S108: The electronic device 102 receives and plays the first video stream, and the electronic device 103 receives and plays the second video stream.

After the electronic device 103 joins the video call, a related process in which the electronic device 102 receives and plays the first video stream is the same as a related process in step S104. For details, refer to related descriptions. Details are not described herein again.

A related process in which the electronic device 103 receives and plays the second video stream is similar to a related process in which the electronic device 102 receives and plays the first video stream in step S104. For details, refer to related descriptions. Details are not described herein again.

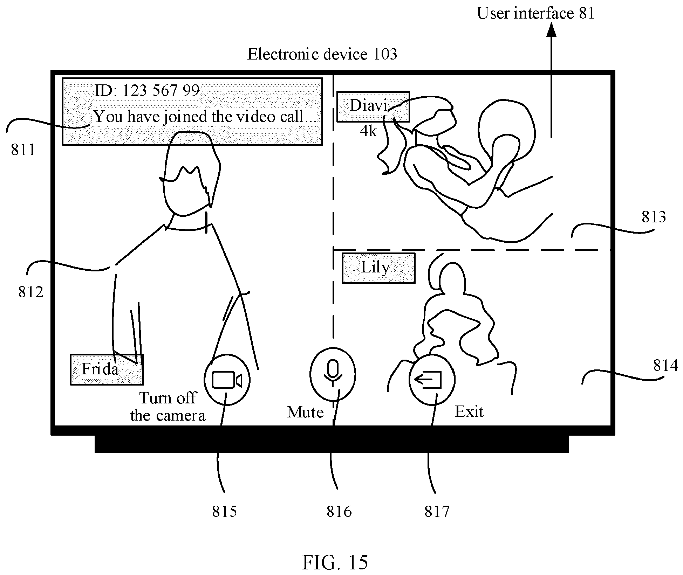

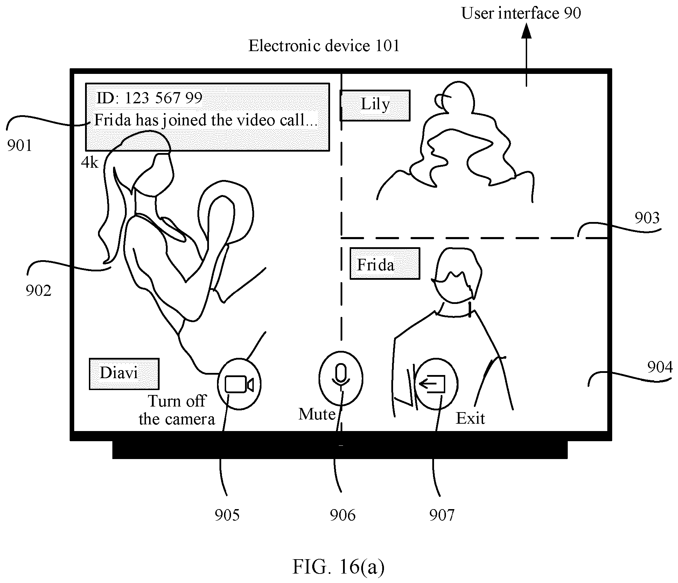

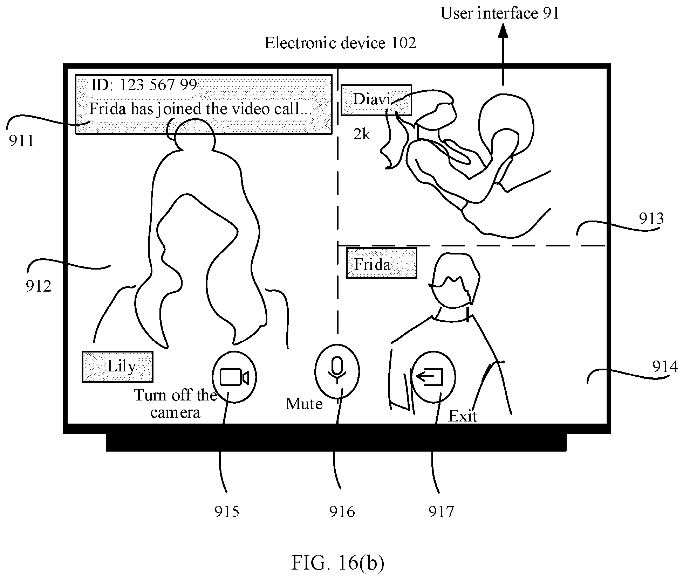

FIG. 15 and FIG. 16(a) and FIG. 16(b) show an example scenario in which the electronic devices 101 to 103 play a video stream after the electronic device 103 joins a video call.

FIG. 15 shows a user interface 81 displayed on the electronic device 103 in a process in which the electronic devices 101 to 103 make a video call. The user interface 81 includes a prompt box 811, and the prompt box includes prompt text: "You have joined the video call". The user interface 81 displays video streams 812 to 814. The video stream 812 is a video stream collected by the electronic device 103. The video stream 813 is a video stream received by the electronic device 103 from the electronic device 101. For example, the electronic device 103 plays the video stream 813 transmitted from the electronic device 101, and resolution of the video stream 813 is 4k. The video stream 814 is a video stream received by the electronic device 103 from the electronic device 102. The user interface 81 further includes a camera turn-off control 815, a mute control 816, and an exit control 817.

FIG. 16(a) shows a user interface 90 displayed on the electronic device 101 in a process in which the electronic devices 101 to 103 make a video call. The user interface 90 includes a prompt box 901, and the prompt box includes prompt text: "Frida has joined the video call". The user interface 90 displays video streams 902 to 904. The video stream 902 is a video stream collected by the electronic device 101. For example, the video stream 902 is collected by the electronic device 101 by using a second parameter, where the second parameter includes second resolution, and the second resolution is 4k. In this case, the resolution of the video stream 902 is 4k. The video stream 903 is a video stream received by the electronic device 101 from the electronic device 102. The video stream 904 is a video stream received by the electronic device 101 from the electronic device 103. The user interface 90 further includes a camera turn-off control 905, a mute control 906, and an exit control 907.

FIG. 16(b) shows a user interface 91 displayed on the electronic device 102 in a process in which the electronic devices 101 to 103 make a video call. The user interface 91 includes a prompt box 911, and the prompt box includes prompt text: "Frida has joined the video call". The user interface 91 displays video streams 912 to 914. The video stream 912 is a video stream collected by the electronic device 102. The video stream 913 is a video stream received by the electronic device 102 from the electronic device 101. For example, the electronic device 102 plays the video stream 913 transmitted from the electronic device 101, and resolution of the video stream 913 is 2k. The video stream 914 is a video stream received by the electronic device 102 from the electronic device 103. The user interface 91 further includes a camera turn-off control 915, a mute control 916, and an exit control 917.

Optional steps S109 and S110 describe a process in which the electronic device 102 exits the video call.

S109: The electronic device 102 disconnects the video call connection from the electronic device 101.

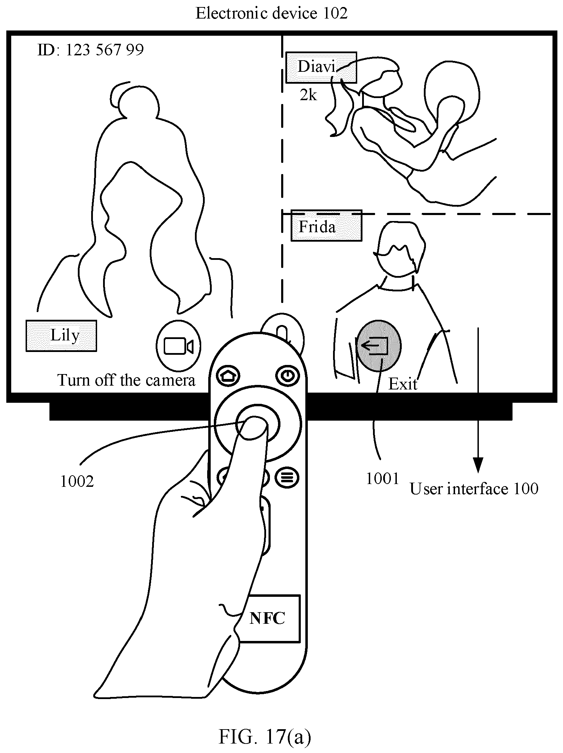

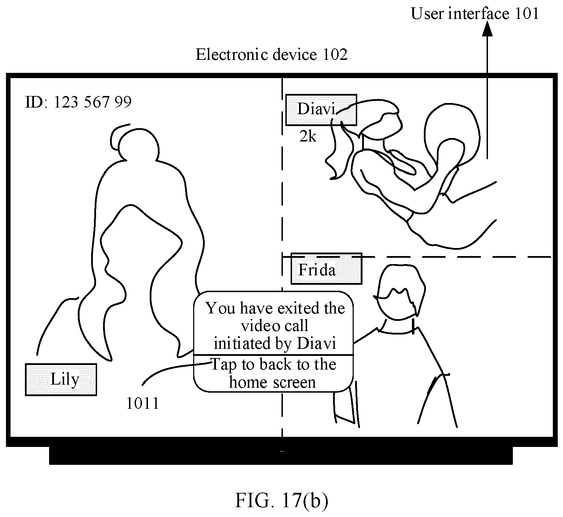

FIG. 17(a) and FIG. 17(b) show an example scenario in which an electronic device 102 exits a video call.

FIG. 17(a) shows a user interface 10 displayed on the electronic device 102 in a process in which the electronic device 102 exits the video call when the electronic devices 101 to 103 make a video call. As shown in FIG. 17(a), after the electronic device 102 responds to an operation of selecting an exit icon 1001 of leaving a video call by the user, the exit icon 1001 is dimmed. The electronic device 102 exits the video call in response to an operation (for example, a press operation or a tap operation) performed by the user on a confirm key 1002 of a remote control, and after the electronic device 101 exits the video call, the electronic device 101 may display a user interface 101 shown in FIG. 17(b).

As shown in FIG. 17(b), after the electronic device 102 exits the video call, the user interface 101 may display a prompt box 1011, and the prompt box includes prompt text: "You have exited the video call initiated by Diavi, tap to back to the home screen".

S110: The electronic device 101 collects an image sequence, uses the second parameter to process the image sequence to obtain a video stream, and sends the video stream to the electronic device 103.

Resolution used by the sensor 105 during collection is the same as the resolution in S109. The sensor 105 does not need to be restarted.

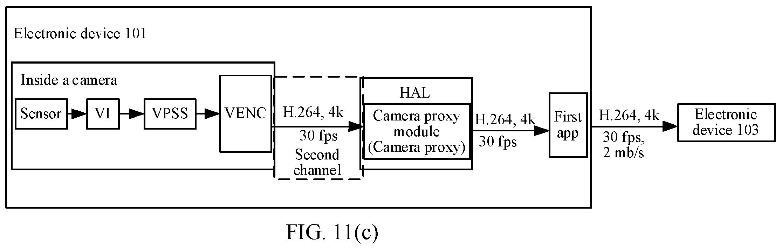

For example, FIG. 11(c) shows an example of a process in which the electronic device 101 deletes the first channel, and the electronic device 101 collects an image sequence, processes the image sequence to obtain a video stream, and transmits the video stream.

As shown in FIG. 11(c), after the electronic device 102 exits the video call, the electronic device 101 deletes the first channel that is used to transmit a video stream to the electronic device 102.

For example, after the first channel is deleted, in this case, the VENC 108 of the electronic device 101 processes the image sequence by using the second parameter, outputs a video stream with a decoding format of H.264, resolution of 4k, and frame rate of 30 fps, and then transmits the video stream to the electronic device 103 through the second channel. The transmission process is similar to a process of a related part in FIG. 11(b). For details, refer to related descriptions. Details are not described herein again.

The sensor 105 of the electronic device 101 continues to collect an image sequence. The collected image sequence is processed by a VI 106 and a VPSS 107, and is transmitted to the VENC 108. A process of processing and transmitting the image sequence is the same as that in step S104. For details, refer to the description of step S104. Details are not described herein again.

After the VENC 108 receives the processed image sequence, the VENC 108 only needs to encode a video stream required by the electronic device 103, and transmit the video stream to the electronic device 103. A VENC 108 of the electronic device 101 encodes a video stream with the second parameter, and transmits the video stream to the electronic device 103. This process is the same as step S105. For details, refer to the description of step S105. Details are not described herein again.

S111: The electronic device 103 receives the video stream sent by the electronic device 101 and plays the video stream.

After the electronic device 102 exits the video call, a related process in which the electronic device 103 receives and plays the video stream is the same as a related process in step S104. For details, refer to related descriptions. Details are not described herein again.

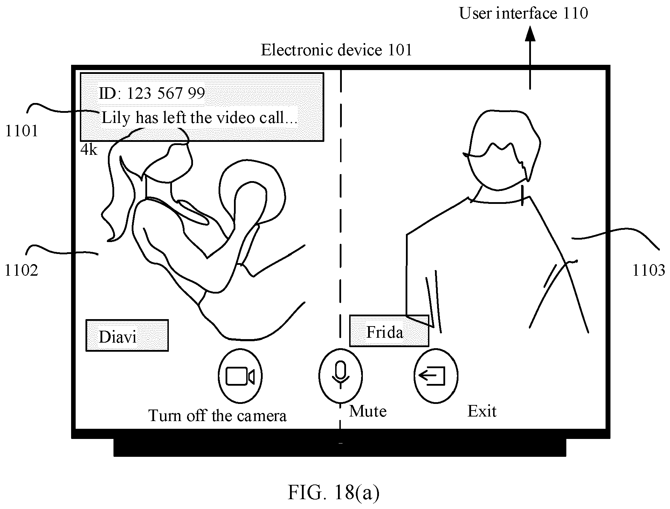

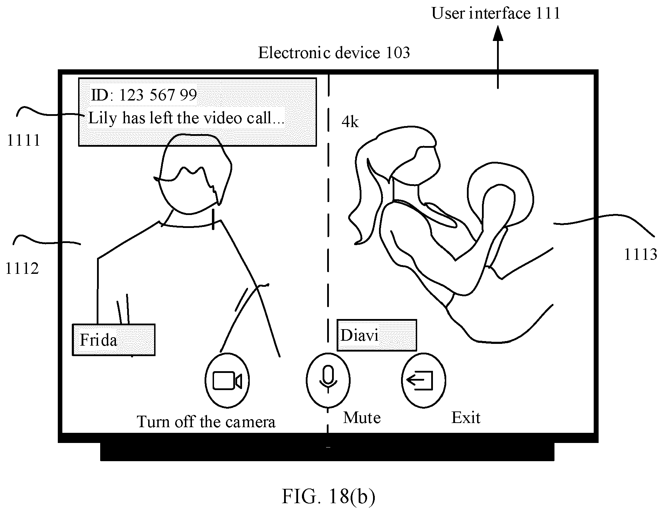

FIG. 18(a) and FIG. 18(b) show an example scenario in which the electronic device 101 and the electronic device 103 play a video stream after the electronic device 103 joins a video call.

FIG. 18(a) shows a user interface 110 displayed on the electronic device 101 after the electronic device 102 exits the video call. The user interface 110 includes a prompt box 1101, and the prompt box 1101 includes prompt text: "Lily has left the video call". The user interface 110 further displays a video stream 1102 and a video stream 1103. The video stream 1102 is a video stream collected by the electronic device 101. For example, the video stream 1102 is collected by the electronic device 101 by using a second parameter, where the second parameter includes second resolution, and the second resolution is 4k. In this case, the resolution of the video stream 1102 is 4k. The video stream 1103 is a video stream received by the electronic device 101 from the electronic device 103.

FIG. 18(b) shows a user interface 111 displayed on the electronic device 103 after the electronic device 102 exits the video call. The user interface 111 includes a prompt box 1111, and the prompt box 1111 includes prompt text: "Lily has left the video call". The user interface 111 displays a video stream 1112 and a video stream 1113. The video stream 1112 is a video stream collected by the electronic device 103. The video stream 1113 is a video stream received by the electronic device 103 from the electronic device 101. For example, the electronic device 103 plays the video stream 1113 transmitted from the electronic device 101, and resolution of the video stream 1113 is 4k.

According to the method shown in FIG. 7, it can be learned that when the video call method in this application is implemented, the electronic device collects an image sequence based on a parameter negotiated with a peer device, processes the image sequence to obtain a video stream, and then sends the video stream to the peer device. In this embodiment of this application, video stream customization may be implemented by establishing a video stream transmission channel. In addition, when a subsequently added peer device needs a video stream of higher quality, it only needs to restart the sensor105 to collect an image sequence, which is of low delay, and can meet requirements of the user for video stream quality and fluency.

The following describes in detail a process in which an electronic device plays a video stream during a video call.

An example in which the electronic device 101, the electronic device 102, and the electronic device 103 make a video call is used to describe a process in which the electronic device 103 plays a video stream.

During a three-party video call, the electronic device 103 may receive video streams, for example, a video stream 1 and a video stream 2, respectively sent by the electronic device 101 and the electronic device 102. A camera 127 of the electronic device 103 may also perform collecting and processing to output one video stream, for example, a video stream 3. Specifically, the sensor 105 of the electronic device 103 collects an image sequence which is processed by a VI 106 and a VPSS 107, and then is processed by a VENC 108 to output the video stream 3 to be directly transmitted to the first app.

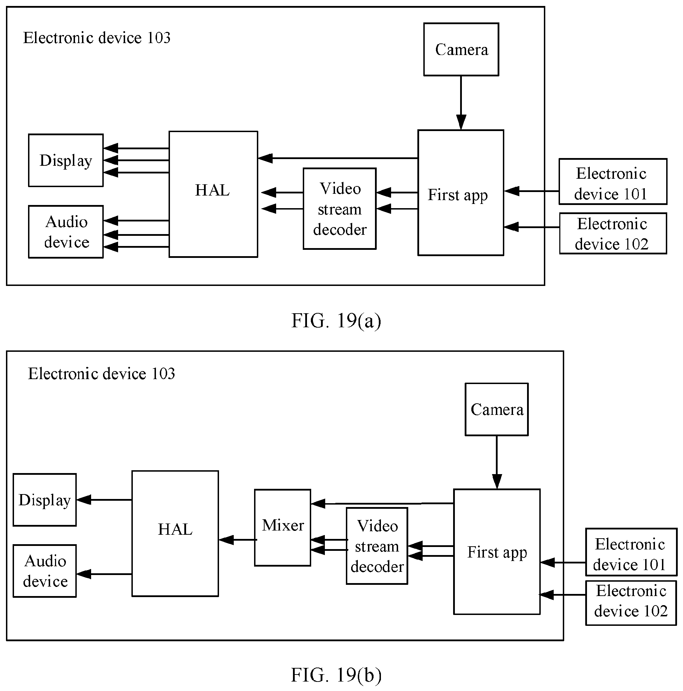

FIG. 19(a) and FIG. 19(b) are a schematic diagram of two manners in which an electronic device 103 processes three video streams according to an embodiment of this application.

FIG. 19(a) shows a manner in which the electronic device 103 processes three video streams. As shown in FIG. 19(a), video streams 1 and 2 pass through a first app, a video stream decoder, and an HAL, and a video stream 3 passes through a camera 127 of the electronic device 103 and the first app, and then is transmitted from the first app to the HAL. After receiving the video streams 1 to 3, the HAL is used to transmit the video streams to a display and an audio device for playing.

FIG. 19(b) shows another manner in which the electronic device 103 processes three video streams. As shown in FIG. 19(b), after obtaining the video streams 1 to 3, the first app transmits the video streams 1 and 2 to the video stream decoder. The video stream decoder transmits the decoded video streams to a mixer. The video stream 3 is directly transmitted to the mixer. The mixer mixes the received video streams 1 to 3 into one video stream, and transmits the mixed video stream to the display and the audio device through the HAL for playing.

The following describes a UVC protocol used for communication between the camera proxy module and the camera 127.

The UVC protocol is a standard protocol used for the camera 127. In this embodiment of this application, the UVC protocol may be extended, and the extended UVC protocol is used to implement communication between the camera proxy module and the camera 127.

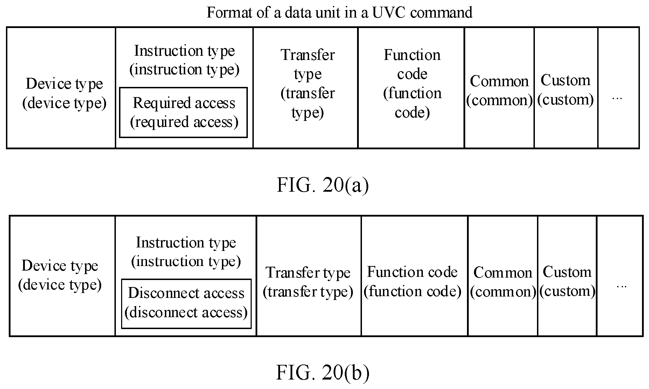

For example, FIG. 20(a) and FIG. 20(b) are a format diagram of a data unit in a UVC protocol according to an embodiment of this application.

FIG. 20(a) and FIG. 20(b) show an example of a first command sent to a camera 127 when a camera proxy module establishes a channel. The first command may be an IOCT command, and the first command is used to transfer a parameter to the camera 127, and is further used to establish a channel.

As shown in FIG. 20(a) and FIG. 20(b), the data unit may include the following fields: a device type (device type), an instruction type (instruction type), transfer type (transfer type) function code (function code), common (common), custom (custom), and the like.

The device type may be used to carry an identifier of an electronic device that makes a video call, and the identifier is used to uniquely determine an electronic device. For example, when the electronic device 101 establishes a channel used to transmit a video stream to the electronic device 102, the field is used to carry identifiers of the electronic device 101 and the electronic device 102. For example, a mobile device identifier (A00000B42381FD) of the electronic device 101 and a mobile device identifier (A00000B42381FF) of the electronic device 102 are carried.

Optionally, the identifier of the electronic device may be one or a combination of a device name, a device physical address, a mobile equipment identifier (mobile equipment identifier, MEID), an international mobile equipment identity (international mobile equipment identity, IMEI), or the like. This is not limited herein.

There are two types of instruction type. One type is an instruction for required access (required access). As shown in FIG. 20(a), when the instruction type is required access, the instruction type may be used to carry an instruction for the electronic device to request to establish a video stream transmission channel between the camera proxy module and the VENC 108. Another is a disconnect access (disconnect access) instruction. As shown in FIG. 20(b), when the instruction type is disconnect access, the instruction type may be used to carry an instruction for the electronic device to request to delete a video stream transmission channel between the camera proxy module and the VENC 108.

The transfer type may be used to carry a parameter negotiated between electronic devices. For example, a parameter negotiated between the electronic device 101 and the electronic device 102 includes resolution and an encoding and decoding format. In this case, the field is used to carry a value of the resolution negotiated between the electronic device 101 and the electronic device 102 and a type of the encoding and decoding format.

In some embodiments, for a format of the data unit in the UVC protocol, fewer or more units may be included provided that the data unit may be used to store an instruction for requesting to establish a video stream transmission pipeline, a parameter that is negotiated between electronic devices for transmitting a video stream, and an identifier of the electronic device. This is not limited herein.

In this embodiment of this application, the electronic device 101, the electronic device 102, and the electronic device 103 may be respectively referred to as a first device, a second device, and a third device.

An embodiment of this application further provides a video encoder (VENC) used for a video call. The VENC is applied to the first device, and the VENC is configured to perform the steps performed by the VENC in the method described in the foregoing embodiment.

An embodiment of this application further provides a camera module used for a video call. The camera includes a sensor and a video encoder (VENC). The sensor is configured to collect an image sequence, and the VENC is the VENC described in the foregoing embodiment.

An embodiment of this application further provides a chip. The chip is applied to a first device. The chip includes one or more processors and an interface. The interface is configured to receive code instructions and transmit the code instructions to the processor. The processor is configured to run the code instructions to enable the first device to perform the method described in the foregoing embodiment.

An embodiment of this application further provides a computer program product including instructions. When the computer program product is run on an electronic device, the electronic device is enabled to perform the method described in the foregoing embodiment.

An embodiment of this application further provides a computer-readable storage medium, including instructions. When the instructions are run on an electronic device, the electronic device is enabled to perform the method described in the foregoing embodiment.

The implementations of this application may be randomly combined, to achieve different technical effects.

All or some of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk)), or the like.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

In summary, what is described above is merely embodiments of the technical solutions of this application, but is not intended to limit the protection scope of this application.

## Claims

1. A video call method, wherein the method is applied to a first device (101), the first device (101) comprises a camera module, wherein the camera module comprises a sensor and a video encoder VENC, wherein the first device further comprises a camera proxy module, and the method comprises:
negotiating (S101), by the first device (101), a first parameter with a second device (101), and establishing a first video call connection based on the first parameter, wherein the first parameter comprises a first encoding and decoding format, a first resolution and a first frame rate;
negotiating (S105), by the first device (101), a second parameter with a third device (103), and establishing a second video call connection based on the second parameter, wherein the second parameter comprises a second encoding and decoding format, a second resolution and a second frame rate, wherein the second frame rate is less than the first frame rate, and the second resolution is less than the first resolution;
collecting (S107), by the first device (101), an image sequence based on the first resolution and the first frame rate by using the sensor;
encoding (S107), by the first device, the image sequence in the first encoding and decoding format by using the VENC, to obtain a first video stream, and sending (S107), by the first device, the first video stream to the second device through the first video call connection;
compressing, by the first device, the image sequence to be at the second resolution and the second frame rate, and
encoding, by the first device, the image sequence in the second encoding and decoding format by using the VENC, to obtain a second video stream, and sending, by the first device, the second video stream to the third device through the second video call connection,
the encoding, by the first device, the image sequence in the second encoding and decoding format by using the VENC, to obtain a second video stream specifically comprises: compressing, by the first device by using the VENC, the image sequence from the first resolution to the second resolution, and encoding the image sequence in the second encoding and decoding format, to obtain the second video stream,
after the negotiating, by the first device, a first parameter with a second device, the method further comprises: establishing, by the first device, a first channel with the VENC based on the first parameter by using the camera proxy module, wherein the first channel is used to transmit the first video stream; and
after the negotiating, by the first device, a second parameter with a third device, the method further comprises: establishing, by the first device, a second channel with the VENC based on the second parameter by using the camera proxy module, wherein the second channel is used to transmit the second video stream.

2. The method according to claim 1, wherein the first device further comprises an instant messaging application; and the method further comprises:
sending, by the first device, the first video stream and the second video stream to the instant messaging application by using the camera module; and
sending, by the first device, the first video stream to the second device by using the instant messaging application through the first video call connection, and further sending the second video stream to the third device through the second video call connection.

3. The method according to claim 1 or 2, wherein the first parameter further comprises a first bit rate, and the second parameter further comprises a second bit rate;
the encoding, by the first device, the image sequence in the first encoding and decoding format by using the VENC, to obtain a first video stream specifically comprises: compressing, by the first device by using the VENC, the image sequence to be at the first bit rate, and encoding the image sequence in the first encoding and decoding format, to obtain the first video stream; and
the encoding, by the first device, the image sequence in the second encoding and decoding format by using the VENC, to obtain a second video stream specifically comprises: compressing, by the first device by using the VENC, the image sequence to be at the second bit rate, and encoding the image sequence in the second encoding and decoding format, to obtain the second video stream.

4. An electronic device (101), wherein the electronic device comprises: a camera module, a memory, and one or more processors, wherein the camera module comprises a sensor and a video encoder VENC, wherein the first device further comprises a camera proxy module, and the camera module and the memory are coupled to the one or more processors, the memory is configured to store computer program code, the computer program code comprises computer instructions, and the one or more processors invoke the computer instructions to enable the electronic device to perform the steps of any one of the claims 1 to 3.

5. A computer-readable storage medium, comprising instructions, wherein when the instructions are run on an electronic device, the electronic device is enabled to perform the method according to any one of claims 1 to 3.

## Patentansprüche

1. Videoanrufverfahren, wobei das Verfahren auf eine erste Vorrichtung (101) angewendet wird, die erste Vorrichtung (101) ein Kameramodul umfasst, wobei das Kameramodul einen Sensor und einen Videocodierer (Video Encoder, VENC) umfasst, wobei die erste Vorrichtung ferner ein Kamera-Proxy-Modul umfasst, und das Verfahren Folgendes umfasst:
Vereinbaren (S101) eines ersten Parameters mit einer zweiten Vorrichtung (101) durch die erste Vorrichtung (101), und Einrichten einer ersten Videoanrufverbindung basierend auf dem ersten Parameter, wobei der erste Parameter ein erstes Codierungs- und Decodierungsformat, eine erste Auflösung und eine erste Rahmenrate umfasst;
Vereinbaren (S105) eines zweiten Parameters mit einer dritten Vorrichtung (103) durch die erste Vorrichtung (101), und Einrichten einer zweiten Videoanrufverbindung basierend auf dem zweiten Parameter, wobei der zweite Parameter ein zweites Codier- und Decodierformat, eine zweite Auflösung und eine zweite Rahmenrate umfasst, wobei die zweite Rahmenrate geringer ist als die erste Rahmenrate und die zweite Auflösung geringer ist als die erste Auflösung;
Sammeln (S107) einer Bildsequenz durch die erste Vorrichtung (101), basierend auf der ersten Auflösung und der ersten Rahmenrate unter Verwendung des Sensors;
Codieren (S107) der Bildsequenz in das erste Codier- und Decodierformat durch die erste Vorrichtung unter Verwendung des VENC, um einen ersten Videostrom zu erlangen, und Senden (S107) des ersten Videostroms durch die erste Vorrichtung an die zweite Vorrichtung über die erste Videoanrufverbindung;
Komprimieren der Bildsequenz durch die erste Vorrichtung, sodass sie die zweite Auflösung und die zweite Rahmenrate aufweist, und Codieren der Bildsequenz in das zweiten Codier- und Decodierformat durch die erste Vorrichtung unter Verwendung des VENC, um einen zweiten Videostrom zu erlangen, und Senden des zweiten Videostroms durch die erste Vorrichtung an die dritte Vorrichtung über die zweite Videoanrufverbindung,
wobei das Codieren der Bildsequenz in das zweite Codier- und Decodierformat durch die erste Vorrichtung unter Verwendung des VENC, um einen zweiten Videostrom zu erlangen, insbesondere Folgendes umfasst: Komprimieren der Bildsequenz von der ersten Auflösung auf die zweite Auflösung durch die erste Vorrichtung unter Verwendung des VENC, und Codieren der Bildsequenz in das zweite Codier- und Decodierformat, um den zweiten Videostrom zu erlangen,
wobei das Verfahren nach dem Vereinbaren eines ersten Parameters mit einer zweiten Vorrichtung durch die erste Vorrichtung ferner Folgendes umfasst: Einrichten eines ersten Kanals mit dem VENC durch die erste Vorrichtung basierend auf dem ersten Parameter unter Verwendung des Kamera-Proxy-Moduls, wobei der erste Kanal verwendet wird, um den ersten Videostrom zu übertragen; und
wobei das Verfahren nach dem Vereinbaren eines zweiten Parameters mit einer dritten Vorrichtung durch die erste Vorrichtung ferner Folgendes umfasst: Einrichten eines zweiten Kanals mit dem VENC durch die erste Vorrichtung basierend auf dem zweiten Parameter unter Verwendung des Kamera-Proxy-Moduls, wobei der zweite Kanal verwendet wird, um den zweiten Videostrom zu übertragen.

2. Verfahren gemäß Anspruch 1, wobei die erste Vorrichtung ferner eine Chat-Anwendung umfasst; und das Verfahren ferner Folgendes umfasst:
Senden des ersten Videostroms und des zweiten Videostroms durch die erste Vorrichtung an die Chat-Anwendung unter Verwendung des Kameramoduls; und
Senden des ersten Videostroms durch die erste Vorrichtung an die zweite Vorrichtung unter Verwendung der Chat-Anwendung über die erste Videoanrufverbindung und weiteres Senden des zweiten Videostroms an die dritte Vorrichtung über die zweite Videoanrufverbindung.

3. Verfahren gemäß Anspruch 1 oder 2, wobei der erste Parameter ferner eine erste Bitrate und der zweite Parameter ferner eine zweite Bitrate umfasst;
wobei das Codieren der Bildsequenz in das erste Codier- und Decodierformat durch die erste Vorrichtung unter Verwendung des VENC, um einen ersten Videostrom zu erlangen, insbesondere Folgendes umfasst: Komprimieren der Bildsequenz durch die erste Vorrichtung unter Verwendung des VENC, sodass sie die erste Bitrate aufweist, und Codieren der Bildsequenz in das erste Codier- und Decodierformat, um den ersten Videostrom zu erlangen; und
wobei das Codieren der Bildsequenz in das zweite Codier- und Decodierformat durch die erste Vorrichtung unter Verwendung des VENC, um einen zweiten Videostrom zu erlangen, insbesondere Folgendes umfasst: Komprimieren der Bildsequenz durch die erste Vorrichtung unter Verwendung des VENC, sodass sie die zweite Bitrate aufweist, und Codieren der Bildsequenz in das zweite Codier- und Decodierformat, um den zweiten Videostrom zu erlangen.

4. Elektronische Vorrichtung (101), wobei die elektronische Vorrichtung Folgendes umfasst: ein Kameramodul, einen Speicher und einen oder mehrere Prozessoren, wobei das Kameramodul einen Sensor und einen Videocodierer (VENC) umfasst, wobei die erste Vorrichtung ferner ein Kamera-Proxy-Modul umfasst und das Kameramodul und der Speicher mit dem einen oder den mehreren Prozessoren gekoppelt sind, wobei der Speicher dazu konfiguriert ist, Computerprogrammcode zu speichern, wobei der Computerprogrammcode Computeranweisungen umfasst und der eine oder die mehreren Prozessoren die Computeranweisungen aufrufen, um die elektronische Vorrichtung in die Lage zu versetzen, die Schritte gemäß einem der Ansprüche 1 bis 3 durchzuführen.

5. Computerlesbares Speichermedium, umfassend Anweisungen, wobei, wenn die Anweisungen auf einer elektronischen Vorrichtung laufen, die elektronische Vorrichtung in die Lage versetzt wird, das Verfahren gemäß einem der Ansprüche 1 bis 3 durchzuführen.

## Revendications

1. Procédé d'appel vidéo, dans lequel le procédé est appliqué à un premier dispositif (101), le premier dispositif (101) comprend un module caméra, dans lequel le module caméra comprend un capteur et un encodeur vidéo VENC, dans lequel le premier dispositif comprend également un module proxy caméra, et le procédé comprend :
la négociation (S101), par le premier dispositif (101), d'un premier paramètre avec un deuxième dispositif (101), et l'établissement d'une première connexion d'appel vidéo sur la base du premier paramètre, dans lequel le premier paramètre comprend un premier format de codage et de décodage, une première résolution et une première fréquence d'images ;
la négociation (S105), par le premier dispositif (101), d'un second paramètre avec un troisième dispositif (103), et l'établissement d'une seconde connexion d'appel vidéo sur la base du second paramètre, dans lequel le second paramètre comprend un second format de codage et de décodage, une seconde résolution et une seconde fréquence d'images, dans lequel la seconde fréquence d'images est inférieure à la première fréquence d'images, et la seconde résolution est inférieure à la première résolution ;
la collecte (S107), par le premier dispositif (101), d'une séquence d'images sur la base de la première résolution et de la première fréquence d'images en utilisant le capteur ;
le codage (S107), par le premier dispositif, de la séquence d'images dans le premier format de codage et de décodage en utilisant le VENC, pour obtenir un premier flux vidéo, et l'envoi (S107), par le premier dispositif, du premier flux vidéo au deuxième dispositif via la première connexion d'appel vidéo ;
la compression, par le premier dispositif, de la séquence d'images pour qu'elle soit à la seconde résolution et à la seconde fréquence d'images, et
le codage, par le premier dispositif, de la séquence d'images dans le second format de codage et de décodage en utilisant le VENC, pour obtenir un second flux vidéo, et l'envoi, par le premier dispositif, du second flux vidéo au troisième dispositif via la seconde connexion d'appel vidéo,
le codage, par le premier dispositif, de la séquence d'images dans le second format de codage et de décodage en utilisant le VENC, pour obtenir un second flux vidéo comprend spécifiquement : la compression, par le premier dispositif en utilisant le VENC, de la séquence d'images de la première résolution à la seconde résolution, et le codage de la séquence d'images dans le second format de codage et de décodage, pour obtenir le second flux vidéo,
après la négociation, par le premier dispositif, d'un premier paramètre avec un deuxième dispositif, le procédé comprend également : l'établissement, par le premier dispositif, d'un premier canal avec le VENC sur la base du premier paramètre en utilisant le module proxy caméra, dans lequel le premier canal est utilisé pour transmettre le premier flux vidéo ; et
après la négociation, par le premier dispositif, d'un second paramètre avec un troisième dispositif, le procédé comprend également : l'établissement, par le premier dispositif, d'un second canal avec le VENC sur la base du second paramètre en utilisant le module proxy caméra, dans lequel le second canal est utilisé pour transmettre le second flux vidéo.

2. Procédé selon la revendication 1, dans lequel le premier dispositif comprend également une application de messagerie instantanée ; et le procédé comprend également :
l'envoi, par le premier dispositif, du premier flux vidéo et du second flux vidéo à l'application de messagerie instantanée en utilisant le module caméra ; et
l'envoi, par le premier dispositif, du premier flux vidéo au deuxième dispositif en utilisant l'application de messagerie instantanée via la première connexion d'appel vidéo, et l'envoi ultérieur du second flux vidéo au troisième dispositif via la seconde connexion d'appel vidéo.

3. Procédé selon la revendication 1 ou 2, dans lequel le premier paramètre comprend également un premier débit binaire, et le second paramètre comprend également un second débit binaire ;
le codage, par le premier dispositif, de la séquence d'images dans le premier format de codage et de décodage en utilisant le VENC, pour obtenir un premier flux vidéo comprend spécifiquement : la compression, par le premier dispositif en utilisant le VENC, de la séquence d'images pour qu'elle soit au premier débit binaire, et le codage de la séquence d'images dans le premier format de codage et de décodage, pour obtenir le premier flux vidéo ; et
le codage, par le premier dispositif, de la séquence d'images dans le second format de codage et de décodage en utilisant le VENC, pour obtenir un second flux vidéo comprend spécifiquement : la compression, par le premier dispositif en utilisant le VENC, de la séquence d'images pour qu'elle soit au second débit binaire, et le codage de la séquence d'images dans le second format de codage et de décodage, pour obtenir le second flux vidéo.

4. Dispositif électronique (101), dans lequel le dispositif électronique comprend : un module caméra, une mémoire, et un ou plusieurs processeurs, dans lequel le module caméra comprend un capteur et un encodeur vidéo VENC, dans lequel le premier dispositif comprend également un module proxy caméra, et le module caméra et la mémoire sont couplés aux un ou plusieurs processeurs, la mémoire est configurée pour stocker un code de programme informatique, le code de programme informatique comprend des instructions informatiques, et les un ou plusieurs processeurs invoquent les instructions informatiques, le dispositif électronique étant alors activé pour réaliser les étapes de l'une quelconque des revendications 1 à 3.

5. Support de stockage lisible par ordinateur, comprenant des instructions, dans lequel, lorsque les instructions sont exécutées sur un dispositif électronique, le dispositif électronique est activé pour réaliser le procédé selon l'une quelconque des revendications 1 à 3.
